# EUROPEAN PATENT APPLICATION

(11) **EP 4 712 050 A1**
(43) Date of publication of application: **18.03.2026**
(21) Application number: 24844393.9
(22) Date of filing: 03.06.2024
(51) Int. Cl.: G06V 40/12

(54) **FEATURE EXTRACTION MODEL PROCESSING METHOD AND APPARATUS, AND FEATURE EXTRACTION METHOD AND APPARATUS**

(30) Priority: 27.07.2023 CN 202310931966
(71) Applicant: Tencent Technology (Shenzhen) Company Limited, Shenzhen, Guangdong 518057 (CN)
(72) Inventor: ZHANG, Zhenhong, Shenzhen, Guangdong 518057 (CN)
(74) Representative: EP&C
(86) International application number: PCT/CN2024/097000
(87) International publication number: WO 2025/020698

(57) **Abstract**

A feature extraction model processing method, comprising: acquiring a plurality of sample palm images of a sample palm, and determining a first sample image area comprising a preset part, and a second sample image area other than the first sample image area in each sample palm image (S202); mapping first sample embedding features of the first sample image areas to a key space to obtain key vectors (S204); mapping second sample embedding features of the second sample image areas to a query space to obtain query vectors (S206); performing self-attention prediction on the basis of the key vectors and the query vectors to obtain respective predicted self-attention weights of the first sample embedding features and the second sample embedding features (S208); fusing the first sample embedding features and the second sample embedding features according to the respective predicted self-attention weights to obtain predicted palm features (S210); and performing model training on the basis of predicted differences between the predicted palm features and tag palm features to obtain a feature extraction model (S212).

## Description

### RELATED APPLICATION

This application claims priority to Chinese Patent Application No. 2023109319666, filed on July 27, 2023 and entitled "FEATURE EXTRACTION MODEL PROCESSING METHOD AND APPARATUS, AND FEATURE EXTRACTION METHOD AND APPARATUS".

### FIELD OF THE TECHNOLOGY

This application relates to the field of computer technologies, and in particular, to a feature extraction model processing method and apparatus, a computer device, a storage medium, and a computer program product, and a feature extraction method and apparatus, a computer device, a storage medium, and a computer program product.

### BACKGROUND OF THE DISCLOSURE

With the development of computer technologies, a feature extraction technology appears. The feature extraction technology is widely applied to fields such as text translation, image recognition, and identity authentication. For example, feature extraction is performed on a palm image, and an extracted palm feature is used for identity authentication.

In the traditional feature extraction technology, a palm print feature is extracted from a palm image through a neural network. If a small quantity of palm print features are extracted, a feature different from the obtained palm print features is extracted from another palm image. To be specific, for the same regions in a plurality of palm images, a feature of only one region is extracted, and the same region in another palm image is ignored.

However, there may be a detail difference between the same regions in the plurality of palm images, and directly ignoring the same region in the another palm image may cause inaccurate extraction of detailed palm print features, thereby affecting subsequent related applications of the extracted palm print features.

### SUMMARY

According to various embodiments provided in this application, a feature extraction model processing method and apparatus, a computer device, a computer-readable storage medium, and a computer program, and a feature extraction processing method and apparatus, a computer device, a computer-readable storage medium, and a computer program are provided.

In an aspect, this application provides a feature extraction model processing method, executable by a computer device and including:
obtaining a plurality of sample palm images of a sample palm, and determining a first sample image region and a second sample image region other than the first sample image region in each of the plurality of sample palm images, the first sample image region comprising a preset part of the sample palm;
obtaining a first sample feature vector of the first sample image region, and projecting, using a key weight, the first sample feature vector into a key space to obtain a key vector;
obtaining a second sample feature vector of the second sample image region, and projecting, using a query weight, the second sample feature vector into a query space to obtain a query vector;
determining, according to key vectors and query vectors of the plurality of sample palm images, a first self-attention weight corresponding to the first sample feature vector and a second self-attention weight corresponding to the second sample feature vector for each sample palm image;
fusing the first sample feature vector with the second sample feature vector using the first self-attention weight and the second self-attention weight for the plurality of sample palm images, to obtain a predicted palm feature; and
training the feature extraction model by updating the key weight and the query weight based on a difference between the predicted palm feature and a preset pre-labeled palm feature of the sample palm.

In another aspect, this application further provides a feature extraction model processing apparatus, including:
a sample obtaining module, configured to obtain a plurality of sample palm images of a sample palm, and determine a first sample image region and a second sample image region other than the first sample image region in each of the plurality of sample palm images, the first sample image region comprising a preset part of the sample palm;
a key space projecting module, configured to obtain a first sample feature vector of the first sample image region, and project, using a key weight, the first sample feature vector into a key space to obtain a key vector;
a query space projecting module, configured to obtain a second sample feature vector of the second sample image region, and project, using a query weight, the second sample feature vector into a query space to obtain a query vector;
a weight prediction module, configured to determine, according to key vectors and query vectors of the plurality of sample palm images, a first self-attention weight corresponding to the first sample feature vector and a second self-attention weight corresponding to the second sample feature vector for each sample palm image;
a sample feature fusion module, configured to fuse the first sample feature vector with the second sample feature vector using the first self-attention weight and the second self-attention weight for the plurality of sample palm images, to obtain a predicted palm feature; and
a training module, configured to train the feature extraction model by updating the key weight and the query weight based on a difference between the predicted palm feature and a preset pre-labeled palm feature of the sample palm.

In another aspect, this application further provides a computer device, including a memory and a processor, the memory having a computer program stored therein, and the processor, when executing the computer program, executing the operations of the method embodiments of this application.

In another aspect, this application further provides a computer-readable storage medium, having a computer program stored therein, the computer program, when executed by a processor, executing the operations of the method embodiments of this application.

In another aspect, this application further provides a computer program product, including a computer program, the computer program, when executed by a processor, executing the operations of the method embodiments of this application.

In another aspect, this application provides a feature extraction method, executable by a computer device and including:
obtaining a plurality of palm images of a palm;
through a feature extraction model trained by the feature extraction model processing method,
determining a first image region and a second image region other than the first image region in each of the plurality of palm images, each first image region comprising a preset part of the palm;
obtaining a first feature vector of the first image region and a second feature vector of the second image region; and
fusing the first feature vector with the second feature vector using the first self-attention weight and the second self-attention weight for the plurality of palm images, to obtain a palm feature.

In another aspect, this application further provides a feature extraction apparatus, including:
an image obtaining module, configured to obtain a plurality of palm images of a palm;
a region determining module, configured to determine, through a feature extraction model trained by the feature extraction model processing apparatus according to claim 11, a first image region and a second image region other than the first image region in each of the plurality of palm images, each first image region comprising a preset part of the palm;
a feature obtaining module, configured to obtain a first feature vector of the first image region and a second feature vector of the second image region through the trained feature extraction model; and
a feature fusion module, configured to fuse the first feature vector with the second feature vector using the first self-attention weight and the second self-attention weight for the plurality of palm images through the trained feature extraction model, to obtain a palm feature.

In another aspect, this application further provides a computer device, including a memory and a processor, the memory having a computer program stored therein, and the processor, when executing the computer program, executing the operations of the method embodiments of this application.

In another aspect, this application further provides a computer-readable storage medium, having a computer program stored therein, the computer program, when executed by a processor, executing the operations of the method embodiments of this application.

In another aspect, this application further provides a computer program product, including a computer program, the computer program, when executed by a processor, executing the operations of the method embodiments of this application.

Details of one or more embodiments of this application are provided in the accompanying drawings and descriptions below. Other features and advantages of this application become clear with reference to the specification, the accompanying drawings, and the claims.

### BRIEF DESCRIPTION OF THE DRAWINGS

To describe the technical solutions in the embodiments of this application or the traditional art more clearly, the following briefly describes the accompanying drawings required for describing the embodiments or the traditional art. Apparently, the accompanying drawings in the following descriptions show merely the embodiments of this application. A person of ordinary skill in the art may still derive other drawings from the disclosed accompanying drawings without creative efforts.
FIG. 1 is a diagram of an application environment of a feature extraction model processing method and a feature extraction method in an embodiment.
FIG. 2 is a flowchart of a feature extraction model processing method in an embodiment.
FIG. 3 is a schematic diagram of two sample palm images in different photographing angles in an embodiment.
FIG. 4 is a flowchart of projecting a first sample feature vector into a key space and a second sample feature vector into a query space in an embodiment.
FIG. 5 is a schematic diagram of projecting a sample palm image into a vector space in an embodiment.
FIG. 6 is a flowchart of projecting a first sample feature vector and a second sample feature vector into a value space in an embodiment.
FIG. 7 is a flowchart of determining a first sample image region and a second sample image region other than the first sample image region in each sample palm image in an embodiment.
FIG. 8 is a flowchart of a feature extraction model processing method in an embodiment.
FIG. 9 is a flowchart of a feature extraction model processing method in an embodiment.
FIG. 10 is a flowchart of parallel training on a feature extraction model in an embodiment.
FIG. 11 is a flowchart of a feature extraction method in an embodiment.
FIG. 12 is a schematic scenario diagram of an application scenario of a feature extraction method in an embodiment.
FIG. 13 is a structural block diagram of a feature extraction model processing apparatus in an embodiment.
FIG. 14 is a structural block diagram of a feature extraction apparatus in an embodiment.
FIG. 15 is a diagram of an internal structure of a computer device in an embodiment.

### DESCRIPTION OF EMBODIMENTS

The technical solutions in embodiments of this application are clearly and completely described in the following with reference to the accompanying drawings in the embodiments of this application. Apparently, the described embodiments are merely some rather than all of the embodiments of this application.

Artificial intelligence (AI) is a theory, method, technology, and application system that uses a digital computer or a machine controlled by the digital computer to simulate, extend, and expand human intelligence, perceive an environment, acquire knowledge, and use knowledge to obtain an optimal result. In other words, AI is a comprehensive technology in computer science and attempts to understand the essence of intelligence and produce a new intelligent machine that can react in a manner similar to human intelligence. AI is to study the design principles and implementation methods of various intelligent machines, to enable the machines to have the functions of perception, reasoning, and decision-making.

The AI technology is a comprehensive discipline, and relates to a wide range of fields including both hardware-level technologies and software-level technologies. The basic AI technologies generally include technologies such as a sensor, a dedicated AI chip, cloud computing, distributed storage, a big data processing technology, an operating/interaction system, and electromechanical integration. AI software technologies mainly include several major directions such as a computer vision (CV) technology, a speech processing technology, a natural language processing technology, and machine learning/deep learning.

Machine learning (ML) is a multi-field interdisciplinary subject involving the probability theory, statistics, the approximation theory, convex analysis, the algorithm complexity theory, and the like. ML specializes in studying how a computer simulates or implements a human learning behavior to obtain new knowledge or skills, and reorganize an existing knowledge structure, so as to keep improving its performance. ML is the core of AI, is a basic way to make the computer intelligent, and is applied to various fields of AI. ML and deep learning generally include technologies such as an artificial neural network, a belief network, reinforcement learning, transfer learning, inductive learning, and learning from demonstrations.

Solutions provided in the embodiments of this application relate to technologies such as natural language processing and ML of AI, and are specifically described by using the following embodiments.

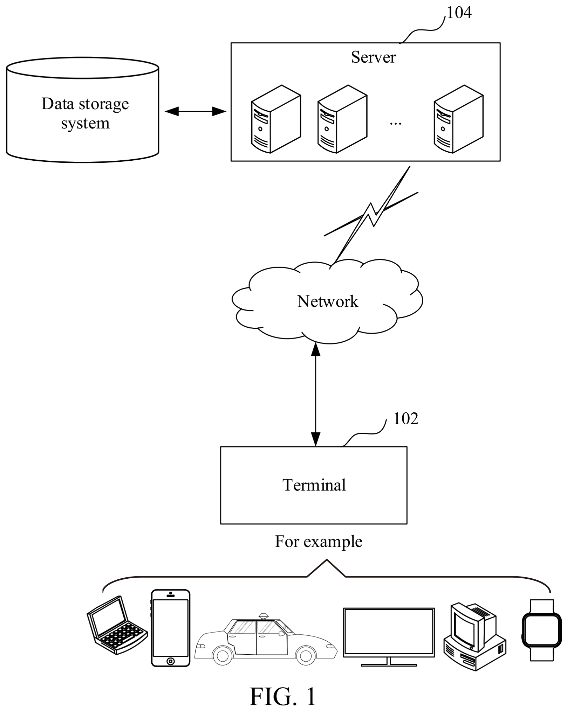

A feature extraction model processing method provided in an embodiment of this application may be applied to an application environment shown in FIG. 1. A terminal 102 communicates with a server 104 through a network. A data storage system may store data that needs to be processed by the server 104. The data storage system may be integrated on the server 104, or placed on a cloud or other servers. Both the terminal 102 and the server 104 may be separately configured to perform the feature extraction model processing method provided in embodiments of this application. The terminal 102 and the server 104 may further be cooperatively configured to perform the feature extraction model processing method provided in embodiments of this application. When the terminal 102 and the server 104 are cooperatively configured to perform the feature extraction model processing method provided in embodiments of this application, the terminal 102 obtains a plurality of sample palm images of a sample palm from the server 104, and determines a first sample image region and a second sample image region other than the first sample image region in each sample palm image. Each first sample image region includes a preset part of the sample palm. The terminal 102 obtains a first sample feature vector of each first sample image region, and projects each first sample feature vector into a key space to obtain a key vector of each first sample feature vector. The terminal 102 obtains a second sample feature vector of each second sample image region, and projects each second sample feature vector into a query space to obtain a query vector of each second sample feature vector. The terminal 102 performs self-attention prediction according to each key vector and each query vector, to obtain a first self-attention weight corresponding to each first sample feature vector and a second self-attention weight corresponding to each second sample feature vector. The terminal 102 fuses each first sample feature vector with each second sample feature vector according to the first self-attention weight and the second self-attention weight, to obtain a predicted palm feature jointly corresponding to the plurality of sample palm images; and obtains a pre-labeled palm feature jointly corresponding to the plurality of sample palm images, and performs model training based on the difference between the predicted palm feature and the pre-labeled palm feature, to obtain a trained feature extraction model. The feature extraction model may be configured on the terminal 102 or the server 104.

The terminal 102 may be, but is not limited to, various personal computers, notebook computers, smart phones, tablet computers, smart voice interaction devices, smart appliances, in-vehicle terminals, aircraft, portable wearable devices, and the like. The server 104 may be an independent physical server, or may be a server cluster or a distributed system formed by a plurality of physical servers, or may be a server that provides basic cloud computing services such as cloud services, cloud databases, cloud computing, cloud functions, cloud storage, network services, cloud communication, middleware services, domain name services, security services, content delivery networks (CDNs), big data, and artificial intelligence platforms.

In an embodiment, a feature extraction method may alternatively be applied to the application environment shown in FIG. 1. Both the terminal 102 and the server 104 may be separately configured to perform the feature extraction method provided in embodiments of this application. The terminal 102 and the server 104 may further be cooperatively configured to perform the feature extraction method provided in embodiments of this application.

Here, "a plurality of" and another quantity mentioned in the embodiments of this application all mean "at least two".

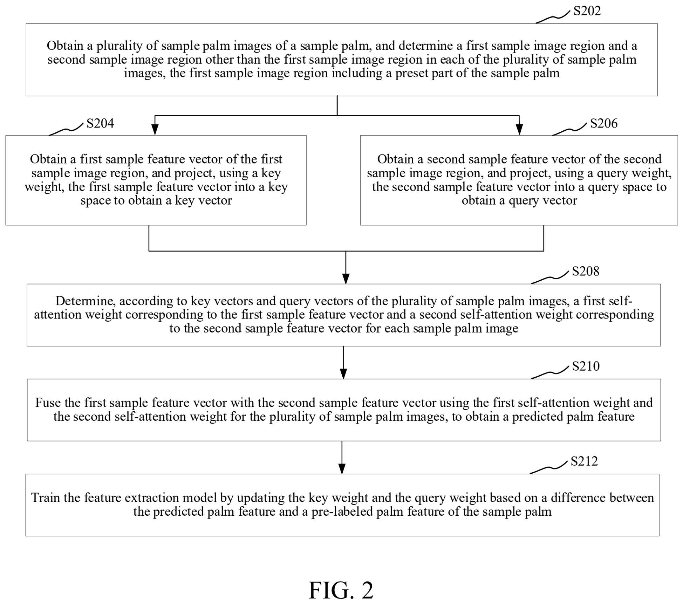

In an embodiment, as shown in FIG. 2, a feature extraction model processing method is provided. Application of the method to the computer device (the computer device may be the terminal or the server in FIG. 1) in FIG. 1 is taken as an example for description, including the following operations:

Operation S202: Obtain a plurality of sample palm images of a sample palm, and determine a first sample image region and a second sample image region other than the first sample image region in each of the plurality of sample palm images, the first sample image region including a preset part of the sample palm.

The sample palm is a palm of a sample object. The sample object may be a person or an animal. The sample palm may be a palm, a sole of a foot, or the like of the person, or may be a front paw, a back paw, or the like of the animal.

The sample palm images are images obtained by photographing the sample palm. The sample palm may include fingers, a center of palm, and a palm edge. The fingers include a thumb, an index finger, a middle finger, a ring finger, a little finger, and the like. The palm edge is a part located around the center of the palm. The sample palm includes a preset part, and the preset part may be a center-of-palm part of the sample palm.

In embodiments of this application, the computer device may obtain a plurality of sample palm images of the same sample palm of the sample object, for example, obtain a plurality of sample palm images of a left palm of a person or obtain a plurality of sample palm images of a right palm of a person.

The computer device determines the preset part in each sample palm image, determines a region, in which the preset part is located, in the sample palm image, and uses the region as the first sample image region. For each sample palm image, the computer device uses a region other than the first sample image region in the sample palm image as the second sample image region, to obtain the first sample image region and the second sample image region of each sample palm image.

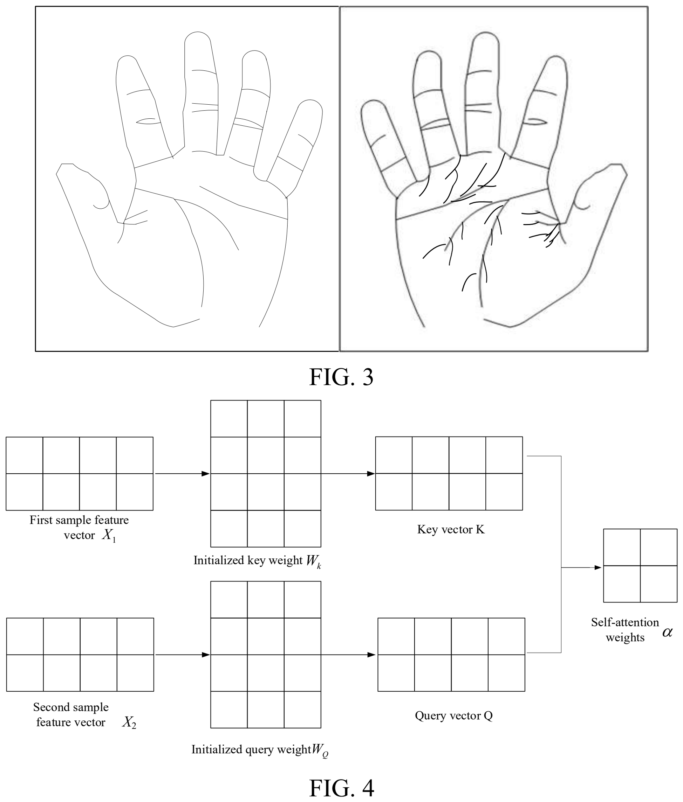

In embodiments of this application, the computer device may photograph the same sample palm of the sample object in different angles through a camera, to obtain the plurality of sample palm images in different photographing angles. As shown in FIG. 3, two sample palm images in different photographing angles are shown.

In embodiments of this application, the computer device may take a video of the same sample palm of the sample object through the camera, and the sample object moves and turns the sample palm in the video taking process, so as to change a palm posture of the sample palm, to obtain a palm video. A plurality of video frames are obtained from the palm video. Each video frame is used as a sample palm image.

Operation S204: Obtain a first sample feature vector of the first sample image region, and project, using a key weight, the first sample feature vector into a key space to obtain a key vector.

The key space means one of three projection spaces in a query-key-value (QKV) mechanism. A QKV projection is an operation in an self-attention mechanism, and is configured for projecting an input vector into three different spaces by performing three independent linear transformations (e.g., via fully connected layers) respectively. By projecting, the input vector is converted into three low-dimensional vectors respectively. Three different spaces are a query space, a key space, and a value space. Three linear transform matrixes include a first linear transform matrix, a second linear transform matrix, and a third linear transform matrix, corresponding to the key space, the query space, a value space, respectively. The projecting or converting refers to multiplying the key weight, the first sample feature vector with the first linear transform matrix. The key space is used to indicate what information the first sample image region offer as a matching target for a query. The query space may be used to indicate the query intent the second sample image region carries. The value space is also referred to as a content space, which contains the actual content information. Once a key successfully matches a query, the corresponding value is aggregated to form the output of the self-attention mechanism. Each first sample feature vector includes a palm print feature of the first sample image region, and may further include a posture feature of the first sample image region.

In embodiments of this application, the computer device performs feature projecting on each first sample image region, to project the first sample image region into a vector space to obtain the first sample feature vector of each first sample image region. The first sample feature vector may represent an feature vector of the first sample image region, with lower dimension than the first sample image region but including important semantic or visual content information of the first sample image region. The first sample feature vector is in the vector space. In some embodiments, the obtaining the first sample feature vector of the first sample image region includes: determining a pixel matrix of the first sample image region, wherein each element in the pixel matrix represents a pixel value of each pixel in the first sample image region; transforming the pixel matrix into a one-dimensional vector including all elements in the pixel matrix; transforming the one-dimensional vector into the first sample feature vector, the first sample feature vector including less elements than the first one-dimensional vector. The pixel value may be in a range from 0 to 255. The transforming indicates reducing the dimension of the one-dimensional vector.

Operation S206: Obtain a second sample feature vector of the second sample image region, and project, using a query weight, the second sample feature vector into a query space to obtain a query vector.

The query space is one of three projection spaces in the QKV mechanism. The query space is different from the key space. Each second sample feature vector includes a palm print feature of the second sample image region, and may further include a posture feature of the second sample image region.

In embodiments of this application, the computer device respectively performs feature projecting on each second sample image region, to project the second sample image region into the vector space to obtain the second sample feature vector of each second sample image region, as described above. Then, the computer device projects each second sample feature vector into the query space to obtain the query vector of each second sample feature vector. In specific, the projecting into the query space refers to multiplying the query weight, the second sample feature vector with the second linear transform matrix

Operation S208: Determine, according to key vectors and query vectors of the plurality of sample palm images, a first self-attention weight corresponding to the first sample feature vector and a second self-attention weight corresponding to the second sample feature vector for each sample palm image.

In this operation, self-attention prediction is performed to determine two weights. The self-attention weight indicates relevance between features in a self-attention mechanism. The relevance between the features may be represented by a similarity between the features.

The self-attention mechanism is used in computer vision and natural language processing, which establishes association and weight allocation between the features by calculating similarities between queries (Q), keys (K), and values (V) in the QKV mechanism. In embodiments of this application, the self-attention mechanism is applied to feature extraction of the plurality of palm images of the same sample palm, to obtain more feature information of the sample palm.

In some embodiments of this application, the computer device determines, for each key vector, a content similarity between the key vector and each query vector, and performs the self-attention prediction according to each content similarity, to obtain the first self-attention weight corresponding to each first sample feature vector and the second self-attention weight corresponding to each second sample feature vector.

In an example, performing the self-attention prediction refers to normalize each content similarity, to obtain the first self-attention weight corresponding to each first sample feature vector and the second self-attention weight corresponding to each second sample feature vector.

In some embodiments of this application, the computer device may determine a key similarity between any two of the key vectors, and perform self-attention prediction according to each content similarity and each key similarity to obtain the first self-attention weight corresponding to each first sample feature vector and the second self-attention weight corresponding to each second sample feature vector.

In embodiments of this application, the computer device may determine a query similarity between any two of the query vectors, and perform self-attention prediction according to each content similarity and each query similarity to obtain the first self-attention weight corresponding to each first sample feature vector and the second self-attention weight corresponding to each second sample feature vector.

Operation S210: Fuse the first sample feature vector with the second sample feature vector using the first self-attention weight and the second self-attention weight for the plurality of sample palm images, to obtain a predicted palm feature.

In embodiments of this application, the fusing means weighted summation, i.e., for each of the plurality of sample palm images, multiplying the first sample feature vector with the first self-attention weight, and multiplying the second sample feature vector with the second self-attention weight.

Further, the computer device sums up two products, obtained by the above two multiplying, of the plurality of sample palm images, to obtain the predicted palm feature jointly corresponding to the plurality of sample palm images.

Operation S212: Train the feature extraction model by updating the key weight and the query weight based on a difference between the predicted palm feature and a pre-labeled palm feature of the sample palm.

In this option, a pre-labeled palm feature jointly corresponding to the plurality of sample palm images is obtained, and model training is performed based on the difference between the predicted palm feature and the pre-labeled palm feature, to obtain the trained feature extraction model. In embodiments of this application, the pre-labeled palm feature is used as a reference result of model training. In each iteration, the model parameters to adjusted at least include the key weight, the query weight and the content weight. The trained feature extraction model includes the final values of the key weight, the query weight and the content weight.

In embodiments of this application, the computer device determines the difference between the predicted palm feature and the pre-labeled palm feature, and obtains a preset iteration condition. When the difference satisfies the preset iteration condition, the weights are adjusted or updated, until the difference does not satisfy the preset iteration condition after a certain number of iterations. Thus, the trained feature extraction model is obtained.

The preset iteration condition is a condition in which a next iteration needs to be performed. The preset iteration condition may be a preset quantity of iterations, a preset difference threshold, or the like. For example, when the difference is greater than the difference threshold, the model parameter is adjusted and the training is continued. The training is stopped until the difference is less than or equal to the difference threshold, and the feature extraction model on which the training is completed is the final model to be obtained.

In embodiments of this application, the plurality of sample palm images of the sample palm are obtained. The first sample image region and the second sample image region other than the first sample image region in each sample palm image are determined, and each first sample image region includes the preset part of the sample palm, so that the same image regions in the plurality of sample palm images and different image regions in the plurality of sample palm images can be determined. The first sample feature vector of each first sample image region is obtained, and each first sample feature vector is projected into the key space. A feature representation of the first sample image regions including the same preset part of the sample palm (i.e., the same sample image region) can be projected from the vector space to the key space, so as to obtain the key vector of each first sample feature vector. The second sample feature vector of each second sample image region is obtained, and each second sample feature vector is projected into the query space. Feature representations of different second sample image regions can be projected from the vector space to the query space, so as to obtain the query vector of each second sample feature vector. The first self-attention weight corresponding to each first sample feature vector of the plurality of sample palm images and the second self-attention weight corresponding to each second sample feature vector of the plurality of sample palm images can be predicted according to the key vectors of the same sample image region and the query vectors of different sample image regions. The self-attention weights may represent an importance degree of the key vector and the query vector when fusing, in other words, may represent an attention degree of the feature extraction model to the features in the preset part of the sample palm, i.e., the above-described same sample image region, thus simultaneously considering the features in the same sample image region and the features in different sample image regions. Each first sample feature vector and each second sample feature vector are fused according to the first self-attention weight of the first sample feature vector and the second self-attention weight of the second sample feature vector, so that the same features and different features in the plurality of sample palm images can be fused, so as to obtain the predicted palm feature jointly corresponding to the plurality of sample palm images. Since the first self-attention weight of each first sample feature vector may be different, the features extracted for the same preset part are not completely the same. Therefore, different detailed features existing in the same sample image region can be extracted, thereby obtaining a larger amount of feature information. The pre-labeled palm feature jointly corresponding to the plurality of sample palm images is obtained. The pre-labeled palm feature is used as a palm feature that is expected to be obtained through model training. The model training is performed based on a difference between the predicted palm feature obtained through model prediction and the palm feature that is expected to be obtained, so that the difference between the predicted palm feature and the palm feature that is expected to be obtained is gradually reduced during the training, thereby gradually improving extraction precision of the model and finally obtaining the feature extraction model.

The finally obtained feature extraction model includes the first and second self-attention weights obtained during training. The first and second self-attention weights may respectively represent the attention degrees to the features of the same image region and the features of different image regions in the plurality of palm images, so that the features of the same image region are focused on, and different detailed features existing in the same image region can be extracted, thereby obtaining a larger amount of feature information.

In an embodiment, the determining, according to key vectors and query vectors of the plurality of sample palm images, a first self-attention weight corresponding to the first sample feature vector and a second self-attention weight corresponding to the second sample feature vector for each sample palm image includes:
determining a key similarity between any two of the key vectors and a query similarity between any two of the query vectors; determining a content similarity between any one of the key vectors and any one of the query vectors; and determining, according to each key similarity, each query similarity, and each content similarity, the first self-attention weight and the second self-attention weight.

In embodiments of this application, the computer device calculates a similarity between every two key vectors. A similarity between two key vectors is referred to as a key similarity. The key similarity may be a cosine similarity or a Euclidean distance. The computer device may calculate a similarity between every two query vectors. A similarity between two query vectors is referred to as a query similarity. The query similarity may be a cosine similarity or a Euclidean distance.

For each key vector, a similarity between the key vector and each query vector is determined, and the similarity between the key vector and the query vector is referred to as a content similarity. The content similarity may be a cosine similarity or a Euclidean distance.

In embodiments of this application, for each first sample feature vector, the first self-attention weight corresponding to the respective first sample feature vector is determined according to the key similarity between the key vector of the respective first sample feature vector and each of other key vectors and the content similarity between the key vector of the respective first sample feature vector and each query vector. For each second sample feature vector, the second self-attention weight corresponding to the respective second sample feature vector is determined according to the query similarity between the query vector of the respective second sample feature vector and each of other query vectors and the content similarity between the query vector of the each of other second sample feature vector and each key vector.

The other key vectors are key vectors except the key vector of one first sample feature vector among all the key vectors. The other query vectors are query vectors except the query vector of one second sample feature vector among all the query vectors.

Further, for each first sample feature vector, the key similarity between the key vector of the respective first sample feature vector and each of other key vectors and the content similarity between the key vector of the respective first sample feature vector and each query vector are determined, and the determined key similarities and the determined content similarities are fused (e.g., summed up, normalized, or using a softmax function) to obtain the first self-attention weight corresponding to the first sample feature vector. For each second sample feature vector, the query similarity between the query vector of the respective second sample feature vector and each of other query vectors and the content similarity between the query vector of the respective second sample feature vector and each key vector are determined, and the determined query similarities and the determined content similarities are fused (e.g., summed up, normalized, or using a softmax function) to obtain the second self-attention weight corresponding to the second sample feature vector.

In embodiments of this application, a cosine similarity between the key vectors is determined. The cosine similarity between two key vectors is used as the key similarity between the two key vectors. A cosine similarity between the query vectors is determined. The cosine similarity between two query vectors is used as the query similarity between the two query vectors.

In embodiments of this application, a distance between the key vectors is determined. The distance between two key vectors is used as the key similarity between the two key vectors. The distance between the two key vectors may be a Euclidean distance between the two key vectors.

A distance between the query vectors is determined. The distance between two query vectors is used as the query similarity between the two query vectors. The distance between the two query vectors may be a Euclidean distance between the two query vectors.

In embodiments of this application, for each iteration of model training, the computer device determines key vectors and query vectors in the iteration, so as to determine a key similarity between any two of the key vectors in the iteration and a query similarity between any two of the query vectors in the iteration. In the iteration, for each key vector, a content similarity between the key vector and each query vector is determined. Self-attention prediction is performed according to each key similarity, each query similarity, and each content similarity that are in the iteration, to obtain the first self-attention weight corresponding to each first sample feature vector and the second self-attention weight corresponding to each second sample feature vector.

In embodiments of this application, the key similarity between any two of the key vectors and the query similarity between any two of the query vectors are determined. The key similarity indicates a degree of correlation between the key vectors. A higher key similarity indicates a larger degree of correlation between the key vectors. The query similarity represents a degree of correlation between the query vectors. A higher query similarity indicates a larger degree of correlation between the query vectors. For each key vector, the content similarity between the key vector and each query vector is determined. The content similarity indicates a degree of correlation between the key vector and the query vector. A higher content similarity indicates a higher degree of correlation between the key vector and the query vector. The self-attention prediction is performed according to each key similarity, each query similarity, and each content similarity to obtain the first self-attention weight corresponding to each first sample feature vector and the second self-attention weight corresponding to each second sample feature vector, so that the corresponding weights can be calculated based on the degrees of correlation between the vectors, and the self-attention weights of all the features in the plurality of sample palm images can be obtained.

In an embodiment, the projecting, using a key weight, the first sample feature vector into a key space to obtain a key vector includes: initializing the key weight, and multiplying the initialized key weight, the first sample feature vector and a preset first linear transformation matrix representing the key space, to obtain the key vector.

The projecting, using a query weight, the second sample feature vector into a query space to obtain a query vector includes: initializing the query weight, and multiplying the initialized query weight, the second sample feature vector and a preset second linear transformation matrix representing the query space, to obtain the query vector.

The key weight represents a conversion coefficient for conversion from the vector space to the key space in the training process. The query weight represents a conversion coefficient for conversion from the vector space to the key space in the training process.

In embodiments of this application, the computer device obtains the initialized key weight, and performs point multiplication on the initialized key weight and each first sample feature vector, to project the product into the key space, to obtain the key vector of each first sample feature vector.

The computer device obtains the initialized query weight, and performs point multiplication on the initialized query weight and each second sample feature vector, to project the product into the query space, to obtain the query vector of each second sample feature vector.

In embodiments of this application, the computer device obtains the trained feature extraction model through a plurality of times of iterative training, and each iteration corresponds to a value of the key weight and a value of the query weight. A current key weight of each iteration is obtained based on adjustment on the previous key weight in a previous iteration. A current query weight of each iteration is obtained based on adjustment on the previous query weight in a previous iteration.

For each iteration, the computer device obtains the current key weight of the respective iteration, and projects each first sample feature vector into the key space based on the current key weight of the respective iteration, to obtain the key vector of each first sample feature vector in the respective iteration.

For each iteration, the computer device obtains the current query weight of the respective iteration, and projects each second sample feature vector into the query space based on the current query weight of the respective iteration, to obtain the query vector of each second sample feature vector in the respective iteration.

For each iteration, the computer device determines the first self-attention weight corresponding to each first sample feature vector in respective the iteration and the second self-attention weight corresponding to each second sample feature vector in the respective iteration according to each key vector and each query vector in the respective iteration. The first sample feature vectors and the second sample feature vectors are fused according to the first self-attention weights and the second self-attention weights in the respective iteration, to obtain the predicted palm feature jointly corresponding to the plurality of sample palm images in the iteration. The current key weight and the current query weight that correspond to the respective iteration are adjusted based on the difference between the predicted palm feature and the pre-labeled palm feature, and an updated key weight and an updated query weight are obtained for the next iteration.

As shown in FIG. 4, an initialized key weight is *Wₖ*, and a first sample feature vector is *X*₁. A key vector K is obtained by projecting the first sample feature vector *X*₁ into a key space through the initialized key weight *Wₖ*.

An initialized query weight is *W_{Q},* and a second sample feature vector is *X*₂. A query vector Q is obtained by projecting the second sample feature vector *X*₂ into a key space through the initialized query weight *W_{Q}*. The self-attention weights *α* are determined according to each key vector K and each query vector Q, including the above first self-attention weight and the above second self-attention weight.

In embodiments of this application, the initialized key weight is obtained. Each first sample feature vector is projected into the key space based on the initialized key weight, so that each first sample image region can be accurately projected from a vector space to the key space, to obtain the key vector of each first sample feature vector. The initialized query weight is obtained. Each second sample feature vector is projected into the query space based on the initialized query weight, so that each second sample feature vector can be accurately projected from the vector space to the query space, to obtain the query vector of each second sample feature vector.

In an embodiment, the training the feature extraction model by updating the key weight and the query weight based on a difference between the predicted palm feature and a pre-labelled palm feature of the sample palm includes:
when the difference satisfies a preset iteration condition, determining a key similarity between any two of the key vectors, and adjusting the key weight according to key similarities, to obtain an updated key weight; determining a query similarity between any two of the query vectors, and adjusting the query weight according to query similarities, to obtain an updated query weight. The updated key weight and the updated query weight are used in the next iteration, until the difference does not satisfy the preset iteration condition, and the trained feature extraction model is obtained.

In embodiments of this application, the computer device determines the difference between the predicted palm feature and the pre-labeled palm feature, and compares the difference and the preset iteration condition. When the difference satisfies the preset iteration condition, the computer device determines the key similarity between any two of the key vectors, and adjusts the key weight according to each key similarity, to obtain the updated key weight. In addition, the computer device determines the query similarity between any two of the query vectors, and adjusts the query weight according to each query similarity, to obtain the updated query weight.

After the updated key weight and the updated query weight are obtained, the next iteration is performed. The updated key weight is used as the key weight of the next iteration, and the updated query weight is used as the query weight of the next iteration.

In embodiments of this application, each iteration corresponds to a value of the key weight and a value of the query weight. For each iteration, the computer device obtains the key weight and the query weight of the respective iteration, projects each first sample feature vector into the key space based on the key weight of the respective iteration, to obtain the key vector of each first sample feature vector in the respective iteration, and respectively projects each second sample feature vector into the query space based on the query weight of the respective iteration, to obtain the query vector of each second image region in the respective iteration.

For each iteration, the computer device determines the first self-attention weight corresponding to each first sample feature vector in the respective iteration and the second self-attention weight corresponding to each second sample feature vector in the respective iteration according to each key vector and each query vector in the respective iteration, and fuses each first sample feature vector with each second sample feature vector based on the self-attention weights in the respective iteration, to obtain the predicted palm feature jointly corresponding to the plurality of sample palm images in the respective iteration. The computer device determines the difference between the predicted palm feature in the respective iteration and the pre-labeled palm feature, determines the key similarity between any two of the key vectors in the respective iteration when the difference in the respective iteration satisfies the preset iteration condition, and adjusts the key weight in the respective iteration according to each key similarity, to obtain the updated key weight in the respective iteration; determines the query similarity between any two of the query vectors in the respective iteration, and adjusts the query weight in the respective iteration according to each query similarity, to obtain the updated query weight in the respective iteration; and uses the updated key weight as the key weight of the next iteration, and uses the updated query weight as the query weight of the next iteration, until the determined difference does not satisfy the preset iteration condition, and obtains the trained feature extraction model.

The preset iteration condition is not satisfied may be that a quantity of iterations does not satisfy a preset quantity of iterations, the difference of the iteration does not satisfy a preset difference threshold, or the like. The difference of the iteration does not satisfy the preset difference threshold may be that the difference of the respective iteration is less than or equal to the difference threshold.

In embodiments of this application, by determining the difference between the predicted palm feature and the pre-labeled palm feature, a difference between the predicted palm feature obtained by model prediction and the palm feature that is expected to be obtained may be determined. When the difference satisfies the preset iteration condition, it indicates that the next iteration needs to be performed, and the key weight and the query weight are updated. To be specific, the key similarity between any two of the key vectors is determined. The key similarity represents a degree of correlation between the key vectors. A higher similarity indicates a larger degree of correlation. Therefore, the key weight can be adjusted according to each key similarity, to obtain the updated key weight. The query similarity represents a degree of correlation between the query vectors. Thus, the query weight can be adjusted according to each query similarity, to obtain the updated query weight. The updated key weight is used as the key weight of the next iteration, and the updated query weight is used as the query weight of the next iteration, thus entering the next iteration for continuous execution. Therefore, the key weight and the query weight are continuously updated in the iterations, and the self-attention weights determined based on the key weights and the query weights are also continuously updated, so that the difference between the predicted palm feature and the palm feature that is expected to be obtained is gradually reduced in the iterations. The operation is stopped until the determined difference does not satisfy the preset iteration condition. In this case, a final key weight, a final query weight, and final self-attention weights are obtained, thereby obtaining the trained feature extraction model.

In an embodiment, the method further includes:
projecting, using a content weight, the first sample feature vector and the second sample feature vector into a value space, to obtain a first content vector of the first sample feature vector and a second content vector of the second sample feature vector, respectively.

The fusing the first sample feature vector with the second sample feature vector using the first self-attention weight and the second self-attention weight for the plurality of sample palm images, to obtain a predicted palm feature includes:
fusing the first content vector with the second content vector using the first self-attention weight and the second self-attention weight, to obtain the predicted palm feature.

The initialized content weight represents a conversion coefficient for conversion from the vector space to the value space in the training process.

In embodiments of this application, the computer device obtains the initialized content weight, performs point multiplication on the initialized content weight and each first sample feature vector, and performs point multiplication on the initialized content weight and each second sample feature vector. Then, the computer device projects each weighted first sample feature vector and each weighted second sample feature vector into the value space (i.e., multiplying a third linear transformation matrix representing the value space), to obtain a content vector of each first sample feature vector and a content vector of each second sample feature vector.

The computer device fuses the content vector of each first sample feature vector and the content vector of each second sample feature vector based on the first self-attention weight of each first sample feature vector and the second self-attention weight of each second sample feature vector, to obtain the predicted palm feature corresponding to the plurality of sample palm images.

In embodiments of this application, the fusing means that the computer device performs weighted summation on the content vector of each first sample feature vector with the corresponding first self-attention weight as well as the content vector of each second sample feature vector with the corresponding second self-attention weight, to obtain the predicted palm feature jointly corresponding to the plurality of sample palm images.

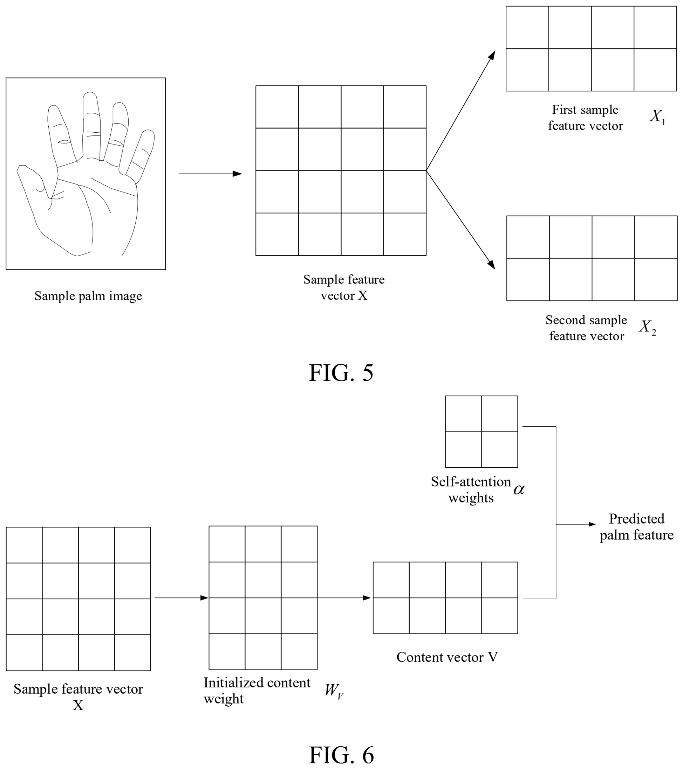

As shown in FIG. 5, a sample palm image is projected into a vector space to obtain a corresponding sample feature vector X. The sample feature vector X includes a first sample feature vector *X*₁ and a second sample feature vector *X*₂. To be specific, a first sample image region and a second sample image region are respectively projected to the vector space to obtain the first sample feature vector *X*₁ and the second sample feature vector *X*₂.

As shown in FIG. 6, the self-attention weights *α* are determined according to each key vector K and each query vector Q, including the above first self-attention weight and the above second self-attention weight.

The sample feature vector X is projected into the value space based on an initialized content weight *W_{V}*. To be specific, each first sample feature vector *X*₁ and each second sample feature vector *X*₂ are respectively projected into the value space, to obtain two content vectors V.

The content vectors V are fused according to the self-attention weights, to obtain a predicted palm feature.

In embodiments of this application, the initialized content weight is obtained. Each first sample feature vector and each second sample feature vector are respectively projected into the value space based on the initialized content weight, so that all feature vectors of the plurality of sample palm images can be accurately projected into the value space, to obtain the content vector of each first sample feature vector and the content vector of each second sample feature vector. The content vector of each first sample feature vector and the content vector of each second sample feature vector are fused according to the first self-attention weight of each first sample feature vector and the second self-attention weight of each second sample feature vector, so that features of the same part in the plurality of sample palm images can be fused to different degrees, and attention degrees to the features of the same part in the sample palm images are different. Therefore, differences between the features of the same part in the plurality of sample palm images can be focused on, and these detailed features having differences can be obtained. Furthermore, with reference to features of other image regions that do not include the preset part, the predicted palm feature jointly corresponding to the plurality of sample palm images contains a larger amount of information, helping to improve accuracy of recognizing and verifying the palm feature in different scenarios.

In an embodiment, the method further includes:
when the difference satisfies the preset iteration condition, determining a content similarity between any one of the key vectors and any one of the query vectors; adjusting the content weight according to content similarities, to obtain an updated content weight used for a next iteration.

In embodiments of this application, when the difference satisfies the preset iteration condition, for each key vector, the content similarity between the key vector and each query vector is determined. The content similarity may be a cosine similarity or a distance. To be specific, a cosine similarity between each key vector and each query vector is used as the content similarity, or a distance between each key vector and each query vector is used as the content similarity. The distance may be a Euclidean distance.

The computer device adjusts the initialized content weight according to each content similarity, to obtain the updated content weight, and uses the updated content weight for the next iteration.

In embodiments of this application, the computer device obtains the feature extraction model through a plurality of times of iterative training, and each iteration corresponds to a key weight, a query weight, and a content weight, which are adjusted based on the corresponding values in a previous iteration.

For each iteration, the computer device obtains the content weight of the respective iteration, and projects each first sample feature vector and each first sample feature vector into the key space based on the content weight of the respective iteration, to obtain the content vector of each first sample feature vector in the respective iteration and the content vector of each second sample feature vector in the respective iteration.

After the first self-attention weight corresponding to each first sample feature vector in the respective iteration and the second self-attention weight corresponding to each second sample feature vector in the respective iteration are determined, the content vectors are fused based on the self-attention weights in the respective iteration, to obtain the predicted palm feature jointly corresponding to the plurality of sample palm images in the respective iteration. The computer device determines the difference between the predicted palm feature in the respective iteration and the pre-labeled palm feature, and adjusts the key weight in the respective iteration according to the key similarity between any two of the key vectors in the respective iteration when the difference in the respective iteration satisfies the preset iteration condition, to obtain the updated key weight in the respective iteration; adjusts the query weight in the respective iteration according to the query similarity between any two of the query vectors in the respective iteration, to obtain the updated query weight in the respective iteration; adjusts the content weight according to the content similarity between the query vectors in the respective iteration, to obtain the updated content weight in the respective iteration; and uses the updated key weight, the updated query weight, the updated content weight for the next iteration, until the determined difference does not satisfy the preset iteration condition, and obtains the trained feature extraction model.

In embodiments of this application, when the difference satisfies the preset iteration condition, for each key vector, the content similarity between the key vector and each query vector is determined. The content similarity represents a degree of correlation between the key vector and the query vector, so as to adjust the content weight according to each content similarity, to obtain the updated content weight. The updated content weight is used for the next iteration, and the returning to the operation of projecting each first sample feature vector into the key space. Thus, the difference between the predicted palm feature and the palm feature that is expected to be obtained is gradually reduced in the iterations, thereby gradually improving extraction precision of a model and finally obtaining the feature extraction model.

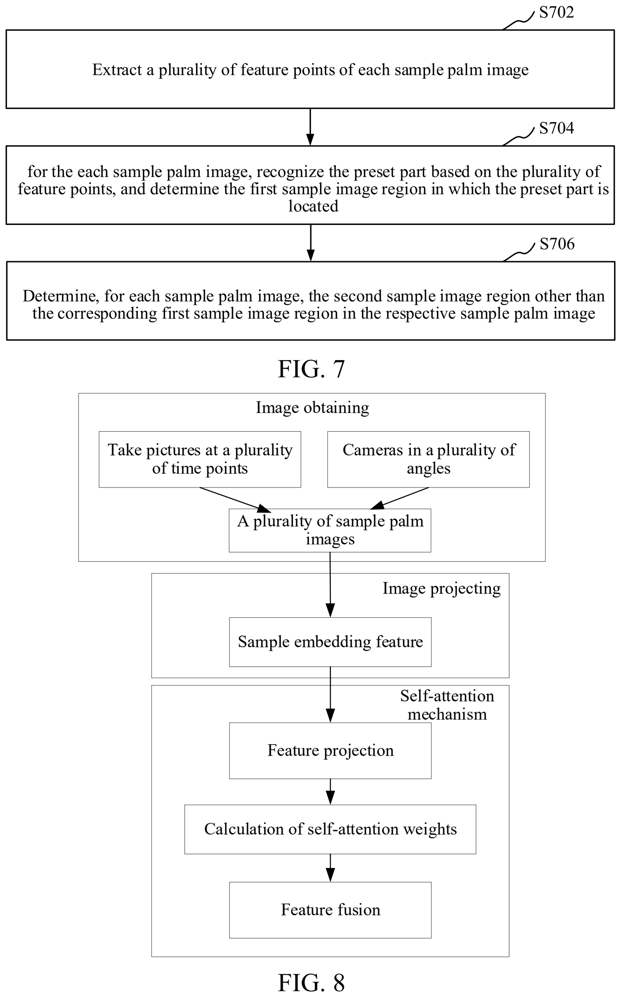

In an embodiment, as shown in FIG. 7, the determining a first sample image region and a second sample image region other than the first sample image region in each sample palm image includes:
Operation S702: Extract a plurality of feature points of each sample palm image.

Operation S704: for the each sample palm image, recognize the preset part based on the plurality of feature points, and determine the first sample image region in which the preset part is located.

In embodiments of this application, the computer device performs feature point extraction on each sample palm image, to obtain a plurality of feature points of each sample palm image. A "feature point" refers to a local region in an image that is salient and stable, and can be reliably detected across different viewpoints, lighting conditions, scales, or even under partial occlusion.

For each sample palm image, the computer device recognizes the preset part based on the feature points of the sample palm image, determines a position, in the sample palm image, of each feature point forming the preset part, and obtains, according to the determined positions, the first sample image region including the preset part.

Operation S706: Determine, for each sample palm image, the second sample image region other than the corresponding first sample image region in the respective sample palm image.

In embodiments of this application, the computer device uses a region other than the first sample image region in the sample palm image as the second sample image region, so as to obtain the first sample image region and the second sample image region in the sample palm image. According to the same processing, the computer device may obtain the first sample image region and the second sample image region of each sample palm image.

In embodiments of this application, the feature points of each sample palm image are extracted. The preset part in each sample palm image is recognized based on the feature points of each sample palm image, and the first sample image region, in which the preset part is located, in each sample palm image is determined, so that image regions of the same preset part included in the plurality of sample palm images can be determined. The same or very similar features exist between these image regions. It facilitates further extraction of detailed features for the same or similar features, thereby improving accuracy of obtaining and recognizing the detailed features. For each sample palm image, the second sample image region other than the corresponding first sample image region in the sample palm image is determined, thus facilitating subsequently performing different processing on a sample image region that includes the preset part and a sample image region that does not include the preset part.

In an embodiment, the feature extraction model processing method includes a plurality of parts such as image obtaining, image projecting, self-attention mechanism processing, parallel training, and feature storage.

As shown in FIG. 8, the image obtaining part is configured for: obtaining a plurality of sample palm images of a palm of the same user. By obtaining the sample palm images in different angles and at different time points, diversified data including more information is obtained. To be specific, the diversified data of the plurality of palm images of the same user is obtained by photographing the palm of the user in a plurality of angles and a plurality of tenses through a plurality of cameras. The data includes palm information in different angles, at different time points, and in different dynamic conditions. This provides a richer information basis for subsequent feature extraction and processing.

The image projecting is intended to project a sample palm image into a particular vector space, so as to extract a feature representation of the sample palm image and reserve most information of the sample palm image. A redundant and sparse embedding mode may be used. To be specific, the embedding vector may have a redundant feature, and the entire vector is sparse. The embedding vector refers to the above first sample feature vector of the first sample image region or the above second sample feature vector of the second sample image region. In this way, the feature information of the sample palm image can be better reserved.

For example, a sample palm image is represented through a pixel matrix. Each element represents a pixel value of the sample palm image. The pixel matrix is a 5*5 matrix. A value of an element is in a range from 0 to 255. Therefore, the pixel matrix may be flattened into a vector including 25 elements, and each pixel value is used as a feature. Dimension reduction is performed on the 25-element vector, and the 25-element vector is projected to a vector representation with a low dimension, i.e., the number of elements is lower than 25, for example, 10, 5. This may be specifically implemented by using a dimension reduction method such as principal component analysis (PCA) or an autocoder. PCA projects original high-dimensional data into a lower-dimensional space through an orthogonal transformation, such that the variance of the projected data is maximized (i.e., the maximum amount of information is retained). An autoencoder is an unsupervised neural network that learns a low-dimensional representation of data through an "encoding-decoding" process. Its core lies in the encoder compressing the high-dimensional input into a low-dimensional "latent vector," while the decoder attempts to reconstruct the original input from this latent vector, thereby forcing the latent vector to retain key information. In this way, information of a sample palm image can be compressed into a low dimension, and important features are reserved. Finally, a low-dimensional embedding feature vector of the sample palm image may be obtained. Each element represents a feature representation of a corresponding pixel of the sample palm image in a low-dimensional space. The vector may be configured for a subsequent palm feature extraction, matching, or recognition task.

By using the redundant and sparse embedding mode, feature information of more sample palm images can be reserved. This mode allows existence of a redundant feature. To be specific, a plurality of embedding feature representations of the same feature are allowed to exist. Meanwhile, the entire vector is represented by using sparsity, so that a model can better extract and represent detailed features of the sample palm image, thereby improving accuracy and robustness of subsequent processing and recognition stages on the palm.

The self-attention mechanism processing is an attention processing unit for a plurality of sample palm images of a multi-head self-attention mechanism, and aims to calculate association and weight allocation between the plurality of sample palm images of the palm by using the self-attention mechanism, thereby obtaining more redundant information and increasing an amount of information of a palm feature. The unit projects the embedding feature vector, i.e., the above first sample feature vector of the first sample image region, and the above second sample feature vector of the second sample image region, into three subspaces by using a QKV mechanism, to learn the features of the sample palm images in the plurality of subspaces in parallel, and enhance a calculation effect by using the multi-head attention mechanism. To be specific, the self-attention mechanism is used to calculate degrees of correlation and weight allocation between the plurality of sample palm images. By converting feature vectors of sample image regions of the sample palm images into query vectors, key vectors, and content vectors, and calculating similarities between the query vectors, the key vectors, and the content vectors, redundant information between the plurality of sample palm images can be obtained, and relevance between these sample palm images can be captured, thereby obtaining more redundant information and increasing an amount of information of a palm feature.

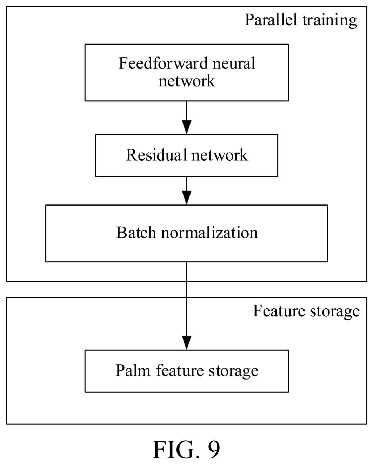

After self-attention weights are calculated, feature fusion is performed on content vectors, to obtain a predicted palm feature. The predicted palm feature obtained by the feature fusion is used as an input of the parallel training part in FIG. 9.

As shown in FIG. 9, the parallel training uses a feedforward neural network as a basic model. The feedforward neural network is a deep learning model, and performs information processing and feature extraction in a manner of transmitting a signal layer by layer. To avoid problems such as gradient explosion and enhance a training effect of a feature extraction model, a residual network (ResNet) structure and a batch normalization technology are used during training. ResNet introduces cross-layer connection and residual learning, to solve problems of gradient disappearance and a limited expression capability during deep network training. In the batch normalization, each small batch of samples are normalized, so that an input distribution of a network is more stable, and a training speed and a generalization capability of a model are improved.

In the parallel training, parallel computation is performed on each layer to reserve a feature of a sample palm image. By parallel computation, features of a plurality of sample palm images can be processed simultaneously, thereby avoiding information loss. This parallel computation mode helps to increase the training speed and reserve detailed features of the sample palm images.

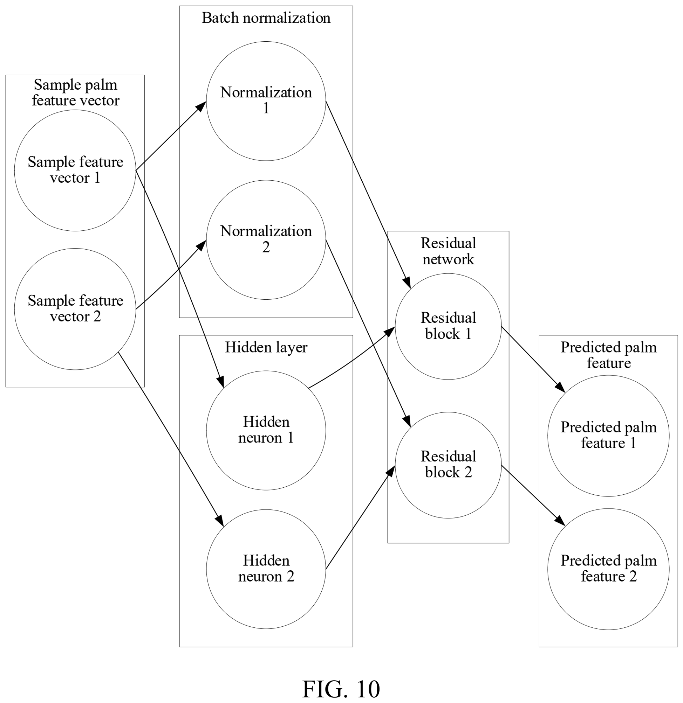

As shown in FIG. 10, by using the feedforward neural network structure, the ResNet, the batch normalization technology, and the parallel computation mode, a parallel training module can increase a training speed of a palm swiping recognition system. To avoid problems such as gradient explosion, parallel computation is performed on each layer, and the palm features of the sample palm images are reserved, thereby improving computation efficiency. In addition, the training process can be accelerated. Meanwhile, the palm features can be effectively extracted and learned, thereby improving accuracy and performance of a palm swiping recognition system.

As shown in FIG. 10, a first sample image region and a second sample image region of a sample palm image may be projected into a vector space, to obtain a sample feature vector 1 and a sample feature vector 2. The sample feature vector 1 and the sample feature vector 2 may be normalized in parallel, and the two normalized vectors are respectively input to residual blocks to implement parallel processing in a residual network.

Or, the sample feature vector 1 and the sample feature vector 2 may be respectively input to hidden neurons of a hidden layer, so that a hidden neuron 1 processes the sample feature vector 1, and a hidden neuron 2 processes the sample feature vector 2, to implement parallel processing. A feature processed by the hidden neuron 1 is input to a residual block 1 of the residual network, and a feature processed by the hidden neuron 2 is input to a residual block 2 of the residual network, thereby obtaining the predicted palm feature 1 output by the residual block 1 and a predicted palm feature 2 output by the residual block 2, to implement parallel processing of the parts during training. A predicted palm feature corresponding to the sample palm image may be obtained by fusing the predicted palm feature 1 with the predicted palm feature 2.

In embodiments of this application, the sample feature vector 1 and the sample feature vector 2 may be embedding features respectively corresponding to two sample palm images, thereby implementing parallel training on a plurality of sample palm images.

In embodiments of this application, to improve calculation efficiency and explore different subspaces, parallel learning during the training allows features of a plurality of sample palm images to be processed simultaneously, to reserve more information and more features. A multi-head attention mechanism allows a model to learn and calculate degrees of correlation and importances between the sample palm images in the plurality of subspaces, thereby increasing an amount of information. By the combination of the parallel learning and the multi-head attention mechanism, redundant information between different sample palm images can be captured more comprehensively, so as to extract richer palm feature information to improve accuracy of a palm swiping recognition system.

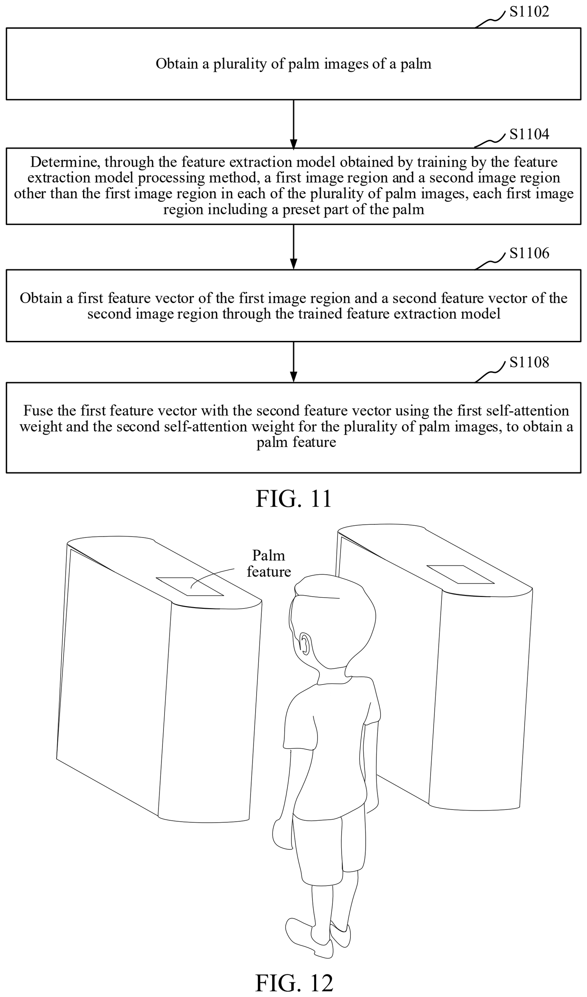

In an embodiment, as shown in FIG. 11, a feature extraction method is provided. Application of the method to the computer device (the computer device may be the terminal or the server in FIG. 1) in FIG. 1 is taken as an example for description, including the following operations:

### Operation S1102: Obtain a plurality of palm images of a palm.

The palm is a palm of an object to be authenticated. The object may be a person or an animal. The palm may be a palm, a sole of a foot, or the like of the person, or may be a front paw, a back paw, or the like of the animal.

The palm images are images obtained by photographing the palm of the to-be-authenticated object. The palm may include fingers, a center of palm, and a palm edge. The fingers include a thumb, an index finger, a middle finger, a ring finger, a little finger, and the like. The palm includes a preset part, and the preset part may be a center-of-palm part of the palm.

In embodiments of this application, the computer device may obtain a plurality of palm images of the palm of the to-be-authenticated object, for example, obtain a plurality of palm images of a left palm of a person or obtain a plurality of palm images of a right palm of a person.

In embodiments of this application, the computer device may photograph the same palm of the to-be-authenticated object in different angles through a camera, to obtain the plurality of palm images in different photographing angles.

In embodiments of this application, the computer device may take a video of the same palm of the to-be-authenticated object through the camera, and the to-be-authenticated object moves and turns the palm in the video taking process, so as to change a palm posture of the palm, to obtain a palm video. A plurality of video frames are obtained from the palm video. Each video frame is used as a palm image.

Operation S1104: Determine, through the feature extraction model trained by the feature extraction model processing method, a first image region and a second image region other than the first image region in each of the plurality of palm images, each first image region including a preset part of the palm.

In embodiments of this application, the computer device inputs each palm image to the feature extraction model. The feature extraction model is obtained by training through the feature extraction model processing method according to embodiments of this application.

The feature extraction model determines the preset part in each palm image, determines a region, in which the preset part is located, in the palm image, and uses the region as the first image region. For each palm image, a region other than the first image region in the palm image is used as the second image region, to obtain the first image region and the second image region of each palm image.

In embodiments of this application, the determining, through the feature extraction model trained by the feature extraction model processing method, a first image region and a second image region other than the first image region in each of the plurality of palm images includes:
extracting a plurality of feature points of each palm image through the feature extraction model obtained by the feature extraction model processing method; through the feature extraction model, recognizing the preset part in each palm image based on the feature points of each palm image, and determine the first sample image region, in which the preset part is located, in each sample palm image; and determining, for each palm image, the second image region other than the corresponding first image region in the palm image through the feature extraction model.

Operation S1106: Obtain a first feature vector of the first image region and a second feature vector of the second image region through the trained feature extraction model.

In embodiments of this application, the computer device performs feature projecting on each first image region through the feature extraction model, to project the first image region into a vector space to obtain the first feature vector of each first image region, represented by the first feature vector. The computer device performs feature projecting on each second image region through the feature extraction model, to project the second image region into the vector space to obtain the second feature vector of each second image region, represented by the second feature vector.

Operation S1108: Fuse the first feature vector with the second feature vector using the first self-attention weight and the second self-attention weight for the plurality of palm images, to obtain a palm feature.

In embodiments of this application, the feature extraction model obtains a plurality of self-attention weights through training. The plurality of self-attention weights include: the first self-attention weight for each first feature vector and the second self-attention weight for each second feature vector. The computer device fuses each first feature vector with each second feature vector based on the self-attention weights, to obtain the palm feature corresponding to the plurality of palm images.

The fusing indicates that the computer device performs weighted summation that the first feature vector multiplying with the first self-attention weight, the second feature vector multiplying with the first self-attention weight, and then sums up the two products of the plurality of palm images, to obtain the palm feature jointly corresponding to the plurality of palm images.

In embodiments of this application, the feature extraction model trained by the feature extraction model processing method includes a plurality of self-attention weights, and the plurality of self-attention weights represent attention degrees of the feature extraction model to features of the same image region and different image regions in the plurality of palm images. The plurality of palm images of the palm are obtained. The first image region and the second image region other than the first image region in each palm image are determined through the feature extraction model. Each first image region includes the preset part of the palm, so that the same image region in the plurality of palm images and different image regions in the plurality of palm images can be determined. The first feature vector of each first image region and the second feature vector of each second image region are obtained through the feature extraction model, and the image regions are converted from an image space to a vector space to obtain the corresponding feature vectors. Each first feature vector and each second feature vector are fused according to the self-attention weight for each first feature vector and the self-attention weight for each second feature vector in the feature extraction model through the feature extraction model, so that features of different image regions and features of the same image regions are both paid attention to. Thus, different detailed features existing in the same image regions can be extracted, and the obtained palm feature includes a larger amount of information. In addition, the extracted palm feature includes more detailed features. This can improve recognition accuracy of feature recognition using the palm feature in different scenarios.

In an embodiment, the feature extraction model further includes a content weight obtained by training. The method further includes: projecting, using the content weight, the first feature vector and the second feature vector into a value space, to obtain a first content vector of the first feature vector and a second content vector of the second feature vector, respectively.

The fusing the first feature vector with the second feature vector using the first self-attention weight and the second self-attention weight for the plurality of palm images, to obtain a palm feature includes: fusing the first content vector with the second content vector using the first self-attention weight and the second self-attention weight, to obtain the palm feature.

The content weight represents a conversion coefficient for converting from the vector space to the value space.

In embodiments of this application, the feature extraction model obtains the plurality of self-attention weights and the plurality of content weights through training. The computer device performs point multiplication on the content weight and each first feature vector through the feature extraction model, to project each first feature vector and each second feature vector into the value space, to obtain the content vector of each first feature vector and the content vector of each second feature vector.

The computer device fuses the content vector of each first feature vector with the content vector of each second feature vector according to the self-attention weight for each first feature vector and the self-attention weight for each second feature vector through the feature extraction model, to obtain the palm feature jointly corresponding to the plurality of palm images.

In embodiments of this application, the self-attention weights include weights corresponding to the content vectors. The computer device performs weighted summation on the content vector of each first feature vector as well as the content vector of each second feature vector, and the corresponding weights through the feature extraction model, to obtain the palm feature jointly corresponding to the plurality of palm images.

In embodiments of this application, through the feature extraction model, each first feature vector and each second feature vector are projected into the value space based on the content weights, so that all feature vectors of the plurality of palm images can be accurately projected into the value space, to obtain the content vector of each first feature vector and the content vector of each second feature vector. The content vector of each first feature vector and the content vector of each second feature vector are fused according to the self-attention weight for each first feature vector and the self-attention weight for each second feature vector, so that features of the same parts in the plurality of palm images can be fused to different degrees, and attention degrees to the features of the same parts in the palm images are different. Therefore, differences between the features of the same parts in the plurality of palm images can be paid attention to, and these detailed features having differences can be obtained. Furthermore, with reference to features of other image regions that do not include the preset part, the palm feature corresponding to the plurality of palm images that are obtained contains a larger amount of information, helping to improve accuracy of recognizing and verifying the palm feature in different scenarios.

In an embodiment, the feature extraction method is applied to a resource transfer scenario. The obtaining a plurality of palm images of a palm includes:
invoking, in response to a resource transfer trigger operation, a camera to photograph the palm of a to-be-authenticated object in different angles, to obtain the plurality of palm images.

The method further includes:
performing identity authentication on the to-be-authenticated object according to the palm feature, to obtain an authentication result; and obtaining resource transfer information when the authentication result indicates that the identity authentication on the to-be-authenticated object succeeds, and performing a resource transfer operation based on the resource transfer information.

In embodiments of this application, in the resource transfer scenario, a to-be-authenticated user may run a resource transfer application on the computer device, and taps to trigger the resource transfer operation after entering the resource transfer information based on the resource transfer application. The resource transfer application invokes, in response to the resource transfer trigger operation, the camera to photograph the palm of the to-be-authenticated object in different angles, to obtain the plurality of palm images.

The computer device inputs the plurality of palm images into the feature extraction model, and determines the first image region and the second image region other than the first image region in each palm image through the feature extraction model, each first image region including the preset part of the palm; obtains the first feature vector of each first image region and the second feature vector of each second image region through the feature extraction model; and fuses each first feature vector with each second feature vector based on the self-attention weights through the feature extraction model, to obtain the palm feature corresponding to the plurality of palm images. The computer device performs identity authentication on the to-be-authenticated object according to the palm feature, to obtain the authentication result; and obtains the resource transfer information when the authentication result indicates that the identity authentication on the to-be-authenticated object succeeds, and performs the resource transfer operation based on the resource transfer information.

In embodiments of this application, each first feature vector and each second feature vector are projected into the value space based on the content weight through the feature extraction model, to obtain the content vector of each first feature vector and the content vector of each second feature vector. The content vector of each first feature vector and the content vector of each second feature vector are fused according to the self-attention weight for each first feature vector and the self-attention weight for each second feature vector through the feature extraction model, to obtain the palm feature corresponding to the plurality of palm images. The computer device performs identity authentication on the object to be authenticated according to the palm feature. When the identity authentication on the object succeeds, the computer device obtains the resource transfer information and performs the resource transfer operation based on the resource transfer information.

In embodiments of this application, the feature extraction method is applied to the resource transfer scenario, so that in response to the resource transfer trigger operation, the camera is invoked to photograph the palm of the object to be authenticated in different angles, to obtain the plurality of palm images. Thus, the palm feature of the plurality of palm images is obtained through the feature extraction model. The obtained palm feature includes features, having detail differences, of the same part in the plurality of palm images, so that the identity authentication on the object can be more accurate according to the palm feature. Therefore, the resource transfer operation is performed based on the resource transfer information, thereby effectively improving security of resource transfer.

In another embodiment, the feature extraction method may be applied to access control, gate control, or the like. As shown in FIG. 12, a user places a palm in a palm recognition region of a gate, the palm recognition region obtains a plurality of palm images of the palm of the user, and the plurality of palm images are processed through a feature extraction model, to obtain a palm feature. Identity authentication is performed on the user according to the palm feature. The gate will be opened when the authentication succeeds. When the authentication fails, the gate will not be opened, and a prompt is sent.

The feature extraction method may be applied to any application scenario in which feature extraction of a palm image needs to be performed, and is not limited to the examples of the foregoing embodiments.

In an embodiment, a feature extraction model processing method is provided, applied to a computer device and including:
obtaining a plurality of sample palm images of a sample palm, and extracting a plurality of feature points of each sample palm image;
next, recognizing a preset part in each sample palm image based on the feature points of each sample palm image, and determining a first sample image region, in which the preset part is located, in each sample palm image; and
then, determining, for each sample palm image, a second sample image region other than the corresponding first sample image region in the sample palm image.

Further, a first sample feature vector of each first sample image region is obtained, and a second sample feature vector of each second sample image region is obtained.

Further, an initialized key weight, an initialized query weight, and an initialized content weight of a first iteration are obtained, and each first sample feature vector is projected into a key space based on the initialized key weight of the current iteration, to obtain a key vector of each first sample feature vector in the current iteration; each second sample feature vector is projected into a query space based on the initialized query weight of the current iteration, to obtain a query vector of each second image region in the current iteration; and each first sample feature vector and each second sample feature vector are projected into a value space based on the initialized content weight of the current iteration, to obtain a content vector of each first sample feature vector and a content vector of each second sample feature vector in the first iteration. In the first iteration, the initialized key weight, the initialized query weight, and the initialized content weight are all preset weights.

Then, in the first iteration, for each key vector, a content similarity between the key vector and each query vector is determined. Each content similarity is normalized to obtain a first self-attention weight corresponding to each first sample feature vector and a second self-attention weight corresponding to each second sample feature vector.

Next, the content vectors in the first iteration are fused based on the self-attention weights, to obtain a predicted palm feature jointly corresponding to the plurality of sample palm images in the current iteration.

Further, a pre-labeled palm feature jointly corresponding to the plurality of sample palm images is obtained, and the difference between the predicted palm feature and the pre-labeled palm feature is determined.

Next, when the difference of the first iteration is greater than a difference threshold, a key similarity between any two of the key vectors in the first iteration is determined, and the initialized key weight of the first iteration is adjusted according to each key similarity, to obtain an updated key weight for used in the next iteration. A query similarity between any two of the query vectors in the first iteration is determined, and the initialized query weight of the first iteration is adjusted according to each query similarity, to obtain an updated query weight for used in the next iteration. In the first iteration, for each key vector, a content similarity between the key vector and each query vector is determined. The initialized content weight of the first iteration is adjusted according to each content similarity, to obtain an updated content weight for used in the next iteration.

Further, the updated key weight, the updated query weight, and the updated query weight in the current iteration are used to the next iteration, until the determined difference is less than or equal to the difference threshold, to obtain a feature extraction model. A key weight, a query weight, a content weight, and self-attention weights of the feature extraction model are obtained when a final iteration is stopped.

In embodiments of this application, a feature extraction method is further provided, including:
obtaining a plurality of palm images of a palm, and determining a first image region and a second image region other than the first image region in each palm image through a trained feature extraction model, each first image region including a preset part of the palm;
then, obtaining a first feature vector of each first image region and a second feature vector of each second image region through the feature extraction model; and projecting each first feature vector and each second feature vector into a value space based on a content weight, to obtain a content vector of each first feature vector and a content vector of each second feature vector.

Further, the content vector of each first feature vector and the content vector of each second feature vector are fused according to a first self-attention weight for each first feature vector and a second self-attention weight for each second feature vector through the trained feature extraction model, to obtain a palm feature jointly corresponding to the plurality of palm images.

In embodiments of this application, feature points of each sample palm image are extracted. The preset part in each sample palm image is recognized based on the feature points of each sample palm image, and a first sample image region, in which the preset part is located, in each sample palm image is determined, so that image regions of the same preset part included in the plurality of sample palm images can be determined. The same or very similar features exist between these image regions. It facilitates further extraction of detailed features for the same or similar features, thereby improving accuracy of obtaining and recognizing the detailed features. For each sample palm image, a second sample image region other than the corresponding first sample image region in the sample palm image is determined, so as to determine different image regions in the plurality of sample palm images.

Each first sample image region is accurately projected from a vector space into a key space based on an initialized key weight, to obtain a key vector of each first sample feature vector. Each second sample image region is accurately projected from the vector space into a query space based on an initialized query weight, to obtain a query vector of each second sample feature vector. Each first sample feature vector and each second sample feature vector are accurately projected from the vector space to the value space based on a content weight, to obtain a content vector corresponding to the first sample feature vector and a content vector corresponding to the second sample feature vector.

A first self-attention weight corresponding to each first sample feature vector and a second self-attention weight corresponding to each second sample feature vector can be predicted according to the key vectors of the same sample image regions and the query vectors of different sample image regions. The self-attention weights may represent an importance of each key vector and an importance of each query vector in fusion, namely, representing attention degrees of a model to features in the same sample image region, thus simultaneously considering the features in the same sample image regions and features in different sample image regions. Each first sample feature vector and each second sample feature vector are fused based on the self-attention weights, so that the same and different features in the plurality of sample palm images can be fused, to obtain a predicted palm feature corresponding to the plurality of sample palm images. The attention degrees of the model to the features in the same sample image regions are different, so that the features extracted from the same sample image regions are not completely the same. Therefore, different detailed features existing in the same sample image regions can be extracted, thereby obtaining a larger amount of feature information. A pre-labeled palm feature corresponding to the plurality of sample palm images is obtained. The pre-labeled palm feature is used as a palm feature that is expected to be obtained through model training, and a difference between the predicted palm feature obtained through model prediction and the palm feature that is expected to be obtained can be determined. When the difference satisfies a preset iteration condition, it indicates that a next iteration needs to be performed, and the key weight and the query weight are updated first. To be specific, a key similarity between any two of the key vectors is determined. The key similarity represents a degree of correlation between the key vectors. A higher similarity indicates a larger degree of correlation. Therefore, the initialized key weight can be adjusted according to each key similarity, to obtain an updated key weight. A query similarity represents a degree of correlation between the query vectors. Thus, the initialized query weight can be adjusted according to each query similarity, to obtain an updated query weight. A content similarity represents a degree of correlation between each query vector and each key vector, so that the initialized content weight can be adjusted according to each content similarity, to obtain an updated content weight.

The updated key weight, the updated query weight, and the updated content weight are used for the next iteration for continuous execution. Therefore, the key weight and the query weight are continuously updated in the iterations, and the self-attention weights determined based on the key weight and the query weight are also continuously updated, so that the difference between the predicted palm feature and the palm feature that is expected to be obtained is gradually reduced in the iterations. The operation is stopped until the determined difference does not satisfy the preset iteration condition. In this case, a final key weight, a final query weight, and final self-attention weights are obtained, thereby obtaining a feature extraction model.

The finally obtained feature extraction model includes a plurality of self-attention weights obtained during training. The plurality of self-attention weights represent the attention degrees to the features of the same image regions and the features of different image regions in the plurality of palm images, so that the features of the same image regions are paid attention to, and different detailed features existing in the same image regions can be extracted, thereby obtaining a larger amount of feature information.

Although the operations are displayed sequentially according to the instructions of the arrows in the flowcharts of the embodiments, these operations are not necessarily performed sequentially according to the sequence instructed by the arrows. Unless otherwise explicitly specified in this application, execution of the operations is not strictly limited, and the operations may be performed in other sequences. Moreover, at least some operations in the flowchart involved in the above embodiments may include a plurality of operations or a plurality of stages. The operations or stages are not necessarily executed completely at the same moment and may be executed at different moments. The operations or stages are not necessarily sequentially executed, and may be executed alternately with other operations or at least some operations or stages of other operations.

Based on the same inventive concept, an embodiment of this application further provides a feature extraction model processing apparatus for implementing the above feature extraction model processing method. An implementation solution provided by the apparatus to solve the problems is similar to the implementation solution recorded in the above method. Therefore, for specific limitations on the one or more embodiments of the feature extraction model processing apparatus provided below, refer to the limitations on the feature extraction model processing method mentioned above, and details will not be elaborated here.

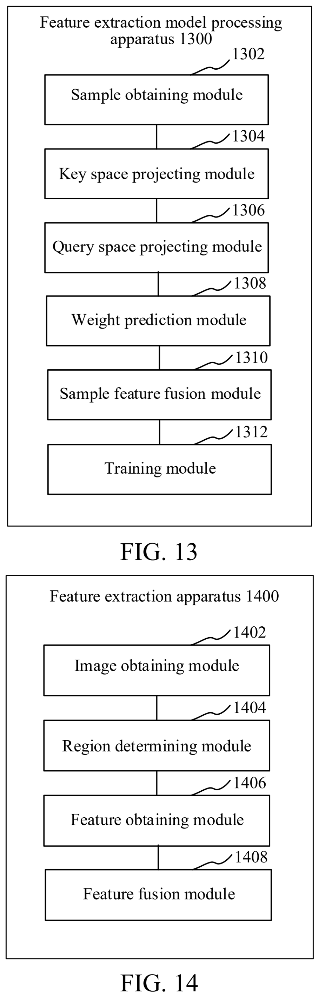

In an embodiment, as shown in FIG. 13, a feature extraction model processing apparatus is provided, including:
a sample obtaining module 1302, configured to obtain a plurality of sample palm images of a sample palm, and determine a first sample image region and a second sample image region other than the first sample image region in each of the plurality of sample palm images, the first sample image region comprising a preset part of the sample palm;
a key space projecting module 1304, configured to obtain a first sample feature vector of the first sample image region, and project, using a key weight, the first sample feature vector into a key space to obtain a key vector;
a query space projecting module 1306, configured to obtain a second sample feature vector of the second sample image region, and project, using a query weight, the second sample feature vector into a query space to obtain a query vector;
a weight prediction module 1308, configured to determine, according to key vectors and query vectors of the plurality of sample palm images, a first self-attention weight corresponding to the first sample feature vector and a second self-attention weight corresponding to the second sample feature vector for each sample palm image;
a sample feature fusion module 1310, configured to fuse the first sample feature vector with the second sample feature vector using the first self-attention weight and the second self-attention weight for the plurality of sample palm images, to obtain a predicted palm feature; and
a training module 1312, configured to train the feature extraction model by updating the key weight and the query weight based on a difference between the predicted palm feature and a preset pre-labeled palm feature of the sample palm.

In embodiments of this application, the plurality of sample palm images of the sample palm are obtained. The first sample image region and the second sample image region other than the first sample image region in each sample palm image are determined, and each first sample image region includes the preset part of the sample palm, so that the same image region in the plurality of sample palm images and different image regions in the plurality of sample palm images can be determined. The first sample feature vector of each first sample image region is obtained, and each first sample feature vector is projected into the key space. A feature representation of the first sample image regions that are the same can be projected from the vector space to the key space, so as to obtain the key vector of each first sample feature vector. The second sample feature vector of each second sample image region is obtained, and each second sample feature vector is projected into the query space. Feature representations of different first sample image regions can be projected from the vector space to the query space, so as to obtain the query vector of each second sample feature vector. The first self-attention weight corresponding to each first sample feature vector and the second self-attention weight corresponding to each second sample feature vector can be predicted according to the key vectors of the same sample image region and the query vectors of different sample image regions. The predicted self-attention weights represent an importance of each key vector and an importance of each query vector in fusion, namely, representing attention degrees of a model to the features in the same sample image regions, thus simultaneously considering the features in the same sample image regions and the features in different sample image regions. Each first sample feature vector and each second sample feature vector are fused based on the predicted self-attention weights, so that the same and different features in the plurality of sample palm images can be fused, to obtain the predicted palm feature corresponding to the plurality of sample palm images. The attention degrees of the model to the features in the same sample image regions are different, so that the features extracted from the same sample image regions are not completely the same. Therefore, different detailed features existing in the same sample image regions can be extracted, thereby obtaining a larger amount of feature information. The pre-labeled palm feature corresponding to the plurality of sample palm images is obtained. The pre-labeled palm feature is used as a palm feature that is expected to be obtained through model training. The model training is performed based on a difference between the predicted palm feature obtained through model prediction and the palm feature that is expected to be obtained, so that the difference between the predicted palm feature and the palm feature that is expected to be obtained is gradually reduced during the training, thereby gradually improving extraction precision of the model and finally obtaining the feature extraction model.

The finally obtained feature extraction model includes the self-attention weights obtained during training. The self-attention weights represent the attention degrees to the features of the same image region and the features of different image regions in the plurality of palm images, so that the features of the same image regions are paid attention to, and different detailed features existing in the same image regions can be extracted, thereby obtaining a larger amount of feature information.

In an embodiment, the weight prediction module 1308 is further configured to determine a key similarity between any two of the key vectors and a query similarity between any two of the query vectors; determine a content similarity between any one of the key vectors and any one of the query vectors; and determine, according to each key similarity, each query similarity, and each content similarity, the first self-attention weight and the second self-attention weight.

In embodiments of this application, the key similarity between any two of the key vectors and the query similarity between any two of the query vectors are determined. The key similarity represents a degree of correlation between the key vectors. A higher key similarity indicates a larger degree of correlation between the key vectors. The query similarity represents a degree of correlation between the query vectors. A higher query similarity indicates a larger degree of correlation between the query vectors. For each key vector, the content similarity between the key vector and each query vector is determined. The content similarity represents a degree of correlation between the key vector and the query vector. A high content similarity indicates a degree of correlation between the key vector and the query vector. The self-attention prediction is performed according to each key similarity, each query similarity, and each content similarity to determine the first self-attention weight corresponding to each first sample feature vector and the second self-attention weight corresponding to each second sample feature vector, so that the corresponding weights can be calculated based on the degrees of correlation between the vectors, and the predicted self-attention weights of all the features in the plurality of sample palm images can be obtained.

In an embodiment, the key space projecting module 1304 is further configured to initialize the key weight, and multiply the initialized key weight, the first sample feature vector and a preset first linear transformation matrix representing the key space, to obtain the key vector.

The query space projecting module 1306 is further configured to initialize the query weight, and multiply the initialized query weight, the second sample feature vector and a preset second linear transformation matrix representing the query space, to obtain the query vector.

In embodiments of this application, the initialized key weight is obtained. Each first sample feature vector is projected into the key space based on the initialized key weight, so that each first sample image region can be accurately projected from a vector space to the key space, to obtain the key vector of each first sample feature vector. The initialized query weight is obtained. Each second sample feature vector is projected into the query space based on the initialized query weight, so that each second sample image region can be accurately projected from the vector space to the query space, to obtain the query vector of each second sample feature vector.

In an embodiment, the training module 1312 is further configured to when the difference satisfies a preset iteration condition, determine a key similarity between any two of the key vectors, and adjust the key weight according to key similarities, to obtain an updated key weight; determine a query similarity between any two of the query vectors, and adjust the query weight according to query similarities, to obtain an updated query weight.

In embodiments of this application, by determining the difference between the predicted palm feature and the pre-labeled palm feature, a difference between the predicted palm feature obtained by model prediction and the palm feature that is expected to be obtained may be determined. When the difference satisfies the preset iteration condition, it indicates that the next iteration needs to be performed, and the key weight and the query weight are updated first. To be specific, the key similarity between any two of the key vectors is determined. The key similarity represents a degree of correlation between the key vectors. A higher similarity indicates a larger degree of correlation. Therefore, the initialized key weight can be adjusted according to each key similarity, to obtain the updated key weight. The query similarity represents a degree of correlation between the query vectors. Thus, the initialized query weight can be adjusted according to each query similarity, to obtain the updated query weight. The updated key weight is used for the next iteration, and the updated query weight is used for the next iteration, thus entering the next iteration for continuous execution. Therefore, the key weight and the query weight are continuously updated in the iterations, and the predicted self-attention weights determined based on the key weight and the query weight are also continuously updated, so that the difference between the predicted palm feature and the palm feature that is expected to be obtained is gradually reduced in the iterations. The operation is stopped until the determined difference does not satisfy the preset iteration condition. In this case, a final key weight, a final query weight, and final self-attention weights are obtained, thereby obtaining the trained feature extraction model.

In an embodiment, the apparatus further includes:
a value space projecting module, configured to project, using a content weight, the first sample feature vector and the second sample feature vector into a value space, to obtain a first content vector of the first sample feature vector and a second content vector of the second sample feature vector, respectively.

The sample feature fusion module 1310 is further configured to fuse the first content vector with the second content vector using the first self-attention weight and the second self-attention weight, to obtain the predicted palm feature.

In embodiments of this application, the initialized content weight is obtained. Each first sample feature vector and each second sample feature vector are projected into the value space based on the initialized content weight, so that all feature vectors of the plurality of sample palm images can be accurately projected into the value space, to obtain the content vector of each first sample feature vector and the content vector of each second sample feature vector. The content vector of each first sample feature vector and the content vector of each second sample feature vector are fused based on the predicted self-attention weights, so that features of the same parts in the plurality of sample palm images can be fused to different degrees, and attention degrees to the features of the same parts in the sample palm images are different. Therefore, differences between the features of the same part in the plurality of sample palm images can be paid attention to, and these detailed features having differences can be obtained. Furthermore, with reference to features of other image regions that do not include the preset part, the predicted palm feature corresponding to the plurality of sample palm images that are obtained contains a larger amount of information, helping to improve accuracy of recognizing and verifying the palm feature in different scenarios.

In an embodiment, the training module 1312 is further configured to when the difference satisfies the preset iteration condition, determine a content similarity between any one of the key vectors and any one of the query vectors; adjust the content weight according to content similarities, to obtain an updated content weight.

In embodiments of this application, when the difference satisfies the preset iteration condition, for each key vector, the content similarity between the key vector and each query vector is determined. The content similarity represents a degree of correlation between the key vector and the query vector, so as to adjust the initialized content weight according to each content similarity, to obtain the updated content weight. The updated content weight is used for the next iteration, and the returning to the operation of projecting each first sample feature vector into the key space based on the key weight is performed, so as to continuously update the content weight in the iterations. Thus, the difference between the predicted palm feature and the palm feature that is expected to be obtained is gradually reduced in the iterations, thereby gradually improving extraction precision of a model and finally obtaining the feature extraction model.

In an embodiment, the sample obtaining module 1302 is further configured to extract a plurality of feature points of each sample palm image; for the each sample palm image, recognize the preset part based on the plurality of feature points, and determine the first sample image region in which the preset part is located; and determine the second sample image region other than the first sample image region in the respective sample palm image.

In embodiments of this application, the feature points of each sample palm image are extracted. The preset part in each sample palm image is recognized based on the feature points of each sample palm image, and the first sample image region, in which the preset part is located, in each sample palm image is determined, so that image regions of the same preset part included in the plurality of sample palm images can be determined. The same or very similar features exist between these image regions. It facilitates further extraction of detailed features for the same or similar features, thereby improving accuracy of obtaining and recognizing the detailed features. For each sample palm image, the second sample image region other than the corresponding first sample image region in the sample palm image is determined, thus facilitating subsequently performing different processing on a sample image region that includes the preset part and a sample image region that does not include the preset part.

Based on the same inventive concept, an embodiment of this application further provides a feature extraction apparatus for implementing the above feature extraction method. An implementation solution provided by the apparatus to solve the problems is similar to the implementation solution recorded in the above method. Therefore, for specific limitations on the one or more embodiments of the feature extraction apparatus provided below, refer to the limitations on the feature extraction method mentioned above, and details will not be elaborated here.

In an embodiment, as shown in FIG. 14, a feature extraction apparatus 1400 is provided, including:
an image obtaining module 1402, configured to obtain a plurality of palm images of a palm;
a region determining module 1404, configured to determine, through a feature extraction model trained by the feature extraction model processing apparatus, a first image region and a second image region other than the first image region in each of the plurality of palm images, each first image region comprising a preset part of the palm;
a feature obtaining module 1406, configured to obtain a first feature vector of the first image region and a second feature vector of the second image region through the trained feature extraction model; and
a feature fusion module 1408, configured to fuse the first feature vector with the second feature vector using the first self-attention weight and the second self-attention weight for the plurality of palm images through the trained feature extraction model, to obtain a palm feature.

In embodiments of this application, the feature extraction model trained by the feature extraction model processing method includes a plurality of self-attention weights, and the plurality of self-attention weights represent attention degrees of the feature extraction model to features of the same image regions and different image regions in the plurality of palm images. The plurality of palm images of the palm are obtained. The first image region and the second image region other than the first image region in each palm image are determined through the feature extraction model. Each first image region includes the preset part of the palm, so that the same image region in the plurality of palm images and different image regions in the plurality of palm images can be determined. The first feature vector of each first image region and the second feature vector of each second image region are obtained through the feature extraction model, and the image regions are converted from an image space to a vector space to obtain the corresponding feature vectors. Through the feature extraction model, fusion is performed according to the self-attention weights of each first feature vector and each second feature vector in the feature extraction model, so that features of different image regions and features of the same image regions are both paid attention to. Thus, different detailed features existing in the same image regions can be extracted, and the obtained palm feature includes a larger amount of information. In addition, the extracted palm feature includes more detailed features. This can improve recognition accuracy of feature recognition using the palm feature in different scenarios.

In an embodiment, the feature extraction model further includes a content weight obtained by training. The apparatus further includes:
a projecting module, configured to project , using the content weight, the first feature vector and the second feature vector into a value space, to obtain a first content vector of the first feature vector and a second content vector of the second feature vector, respectively.

The feature fusion module is further configured to fuse the first content vector with the second content vector using the first self-attention weight and the second self-attention weight, to obtain the palm feature.

In embodiments of this application, through the feature extraction model, each first feature vector and each second feature vector are projected into the value space based on the content weights, so that all feature vectors of the plurality of palm images can be accurately projected into the value space, to obtain the content vector of each first feature vector and the content vector of each second feature vector. The content vector of each first feature vector and the content vector of each second feature vector are fused according to the self-attention weights, so that features of the same parts in the plurality of palm images can be fused to different degrees, and attention degrees to the features of the same parts in the palm images are different. Therefore, differences between the features of the same parts in the plurality of palm images can be paid attention to, and these detailed features having differences can be obtained. Furthermore, with reference to features of other image regions that do not include the preset part, the palm feature corresponding to the plurality of palm images that are obtained contains a larger amount of information, helping to improve accuracy of recognizing and verifying the palm feature in different scenarios.

In an embodiment, the image obtaining module is further configured to invoke, in response to a resource transfer trigger operation, a camera to photograph the palm of an object to be authenticated in different angles, to obtain the plurality of palm images.

The apparatus further includes:
an authentication module, configured to perform identity authentication on the object according to the palm feature, to obtain an authentication result; and
a resource transfer module, configured to obtain resource transfer information when the authentication result indicates that the identity authentication on the object succeeds, and perform a resource transfer operation based on the resource transfer information..

In embodiments of this application, the feature extraction method is applied to the resource transfer scenario, so that in response to the resource transfer trigger operation, the camera is invoked to photograph the palm of the to-be-authenticated object in different angles, to obtain the plurality of palm images. Thus, the palm feature of the plurality of palm images is obtained through the feature extraction model. The obtained palm feature includes features, having detail differences, of the same parts in the plurality of palm images, so that the identity authentication on the to-be-authenticated object can be more accurate according to the palm feature. Therefore, the resource transfer operation is performed based on the resource transfer information, thereby effectively improving security of resource transfer.

The modules in the feature extraction model processing apparatus and the modules in the feature extraction apparatus may be partially or completely implemented through software, hardware, or any combination thereof. The foregoing modules may be built in or independent of a processor of a computer device in a form of hardware, or may be stored in a memory of the computer device in a form of software, for the processor to invoke to execute operations corresponding to the foregoing modules.

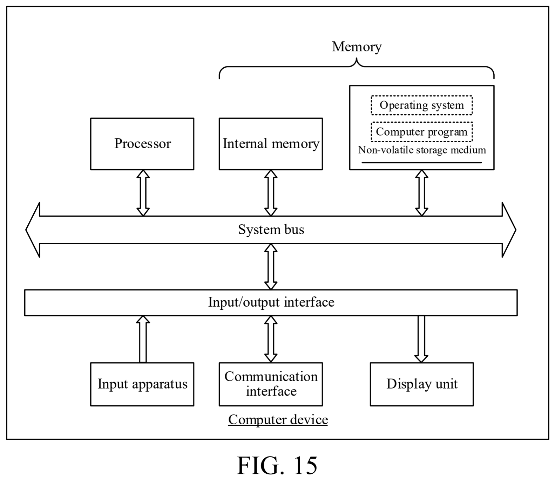

In one embodiment, a computer device is provided. The computer device may be a terminal or a server. The computer device is, for example, a terminal. A diagram of an internal structure of the terminal may be shown in FIG. 15. The computer device includes a processor, a memory, an input/output interface, a communication interface, a display unit, and an input apparatus. The processor, the memory, and the input/output interface are connected through a system bus. The communication interface, the display unit, and the input apparatus are connected to the system bus through the input/output interface. The processor of the computer device is configured to provide computing and control capabilities. The memory of the computer device includes a non-volatile storage medium and an internal memory. The non-volatile storage medium stores an operating system and a computer program. The internal memory provides an environment for running of the operating system and the computer program in the non-volatile storage medium. The input/output interface of the computer device is configured to exchange information between the processor and an external device. The communication interface of the computer device is configured for conducting wired or wireless communication with an external terminal. The wireless communication may be implemented through wireless fidelity (WIFI), a mobile cellular network, near field communication (NFC), or another technology. The computer program implements the feature extraction model processing method when executed by the processor. The display unit of the computer device is configured to form visual pictures, which may be a display screen, a projection apparatus or a virtual reality imaging apparatus. The display screen may be a liquid crystal display screen or an e-ink display screen. The input apparatus of the computer device may be a touch layer covering the display screen, or may be a button, a trackball, or a touchpad arranged on a housing of the computer device, or may be an external keyboard, touchpad, a mouse or the like.

A person skilled in the art can understand that the structure shown in FIG. 15 is merely a block diagram of a partial structure related to a solution in this application, and does not constitute a limitation on the computer device to which the solution in this application is applied. Specifically, the computer device may include more or fewer components than those shown in the figure, or some components may be combined, or a different component layout may be used.

In an embodiment, a computer device is further provided, including a memory and a processor. The memory has a computer program stored therein. The processor, when executing the computer program, implements the operations in the foregoing method embodiments.

In an embodiment, a computer-readable storage medium is provided, having a computer program stored therein. The computer program, when executed by a processor, implements the operations in the foregoing method embodiments.

In an embodiment, a computer program product is provided, including a computer program. The computer program, when executed by a processor, implements the operations in the foregoing method embodiments.

Here, user information (including, but not limited to, user equipment information, user personal information, and the like) and data (including, but not limited to, data for analysis, stored data, displayed data, and the like) involved in this application are all information and data authorized by users or fully authorized by all parties, and collection, use, and processing of relevant data need to comply with relevant laws, regulations, and standards of relevant countries and regions.

A person of ordinary skill in the art may understand that all or some of procedures of the method in the foregoing embodiments may be implemented by a computer program instructing relevant hardware. The computer program may be stored in a non-volatile computer-readable storage medium. When the program is executed, the procedures of the foregoing method embodiments may be implemented. Any reference to a memory, a database, or other media used in the embodiments provided in the present disclosure can include at least one of a non-volatile memory and a volatile memory. The non-volatile memory may include a read-only memory (ROM), a magnetic tape, a floppy disk, a flash memory, an optical memory, a high-density embedded non-volatile memory, a resistive random access memory (ReRAM), a magnetoresistive random access memory (MRAM), a ferroelectric random access memory (FRAM), a phase change memory (PCM), a graphene memory, and the like. The volatile memory can include a random access memory (RAM), external cache memory, or the like. For the purpose of illustration rather than limitation, the RAM may be in various forms, such as a static random access memory (SRAM), or a dynamic random access memory (DRAM). The database involved in the embodiments of this application may include at least one of a relational database and a non-relational database. The non-relational database may include a distributed database based on a block chain, and is not limited thereto. The processor involved in the embodiments provided in this application may be a general-purpose processor, a central processing unit, a graphics processing unit, a digital signal processor, a programmable logic device, a quantum computing-based data processing logic device, or the like, but is not limited thereto.

Technical features of the foregoing embodiments may be randomly combined. To make description concise, not all possible combinations of the technical features in the foregoing embodiments are described.

The foregoing embodiments only describe several implementations of this application, which are described specifically and in detail, but cannot be construed as a limitation to this application. For a person of ordinary skill in the art, several transformations and improvements can be made without departing from the idea of this application. These transformations and improvements belong to this application.

## Claims

1. A feature extraction model processing method, executable by a computer device and comprising:
obtaining a plurality of sample palm images of a sample palm, and determining a first sample image region and a second sample image region other than the first sample image region in each of the plurality of sample palm images, the first sample image region comprising a preset part of the sample palm;
obtaining a first sample feature vector of the first sample image region, and projecting, using a key weight, the first sample feature vector into a key space to obtain a key vector;
obtaining a second sample feature vector of the second sample image region, and projecting, using a query weight, the second sample feature vector into a query space to obtain a query vector;
determining, according to key vectors and query vectors of the plurality of sample palm images, a first self-attention weight corresponding to the first sample feature vector and a second self-attention weight corresponding to the second sample feature vector for each sample palm image;
fusing the first sample feature vector with the second sample feature vector using the first self-attention weight and the second self-attention weight for the plurality of sample palm images, to obtain a predicted palm feature; and
training the feature extraction model by updating the key weight and the query weight based on a difference between the predicted palm feature and a preset pre-labeled palm feature of the sample palm.

2. The method according to claim 1, wherein the determining, according to key vectors and query vectors of the plurality of sample palm images, a first self-attention weight corresponding to the first sample feature vector and a second self-attention weight corresponding to the second sample feature vector for each sample palm image comprises:
determining a key similarity between any two of the key vectors and a query similarity between any two of the query vectors;
determining a content similarity between any one of the key vectors and any one of the query vectors; and
determining, according to each key similarity, each query similarity, and each content similarity, the first self-attention weight and the second self-attention weight.

3. The method according to claim 1 or 2, wherein the projecting, using a key weight, the first sample feature vector into a key space to obtain a key vector comprises:
initializing the key weight, and multiplying the initialized key weight, the first sample feature vector and a preset first linear transformation matrix representing the key space, to obtain the key vector; and
the projecting, using a query weight, the second sample feature vector into a query space to obtain a query vector comprises:
initializing the query weight, and multiplying the initialized query weight, the second sample feature vector and a preset second linear transformation matrix representing the query space, to obtain the query vector.

4. The method according to claim 3, wherein the training the feature extraction model by updating the key weight and the query weight based on a difference between the predicted palm feature and a pre-labelled palm feature of the sample palm comprises:
when the difference satisfies a preset iteration condition,
determining a key similarity between any two of the key vectors, and adjusting the key weight according to key similarities, to obtain an updated key weight;
determining a query similarity between any two of the query vectors, and adjusting the query weight according to query similarities, to obtain an updated query weight.

5. The method according to claim 4, further comprising:
projecting, using a content weight, the first sample feature vector and the second sample feature vector into a value space, to obtain a first content vector of the first sample feature vector and a second content vector of the second sample feature vector, respectively; and
the fusing the first sample feature vector with the second sample feature vector using the first self-attention weight and the second self-attention weight for the plurality of sample palm images, to obtain a predicted palm feature comprising:
fusing the first content vector with the second content vector using the first self-attention weight and the second self-attention weight, to obtain the predicted palm feature.

6. The method according to claim 5, further comprising:
when the difference satisfies the preset iteration condition, determining a content similarity between any one of the key vectors and any one of the query vectors;
adjusting the content weight according to content similarities, to obtain an updated content weight.

7. The method according to any one of claims 1 to 6, wherein the determining a first sample image region and a second sample image region other than the first sample image region in each of the plurality of sample palm images comprises:
extracting a plurality of feature points of each sample palm image;
for the each sample palm image,
recognizing the preset part based on the plurality of feature points, and determining the first sample image region in which the preset part is located; and
determining the second sample image region other than the first sample image region in the respective sample palm image.

8. A feature extraction method, executable by a computer device and comprising:
obtaining a plurality of palm images of a palm;
through a feature extraction model trained by the feature extraction model processing method according to any one of claims 1 to 7,
determining a first image region and a second image region other than the first image region in each of the plurality of palm images, each first image region comprising a preset part of the palm;
obtaining a first feature vector of the first image region and a second feature vector of the second image region; and
fusing the first feature vector with the second feature vector using the first self-attention weight and the second self-attention weight for the plurality of palm images, to obtain a palm feature.

9. The method according to claim 8, wherein the trained feature extraction model further comprises a content weight; and the method further comprises:
projecting, using the content weight, the first feature vector and the second feature vector into a value space, to obtain a first content vector of the first feature vector and a second content vector of the second feature vector, respectively; and
the fusing the first feature vector with the second feature vector using the first self-attention weight and the second self-attention weight for the plurality of palm images, to obtain a palm feature comprises:
fusing the first content vector with the second content vector using the first self-attention weight and the second self-attention weight, to obtain the palm feature.

10. The method according to any one of claims 8 to 9, wherein the obtaining a plurality of palm images of a palm comprises:
invoking, in response to a resource transfer trigger operation, a camera to photograph the palm of an object to be authenticated in different angles, to obtain the plurality of palm images;
the method further comprises:
performing identity authentication on the object according to the palm feature, to obtain an authentication result; and
obtaining resource transfer information when the authentication result indicates that the identity authentication on the object succeeds, and performing a resource transfer operation based on the resource transfer information.

11. A feature extraction model processing apparatus, comprising:
a sample obtaining module, configured to obtain a plurality of sample palm images of a sample palm, and determine a first sample image region and a second sample image region other than the first sample image region in each of the plurality of sample palm images, the first sample image region comprising a preset part of the sample palm;
a key space projecting module, configured to obtain a first sample feature vector of the first sample image region, and project, using a key weight, the first sample feature vector into a key space to obtain a key vector;
a query space projecting module, configured to obtain a second sample feature vector of the second sample image region, and project, using a query weight, the second sample feature vector into a query space to obtain a query vector;
a weight prediction module, configured to determine, according to key vectors and query vectors of the plurality of sample palm images, a first self-attention weight corresponding to the first sample feature vector and a second self-attention weight corresponding to the second sample feature vector for each sample palm image;
a sample feature fusion module, configured to fuse the first sample feature vector with the second sample feature vector using the first self-attention weight and the second self-attention weight for the plurality of sample palm images, to obtain a predicted palm feature; and
a training module, configured to train the feature extraction model by updating the key weight and the query weight based on a difference between the predicted palm feature and a preset pre-labeled palm feature of the sample palm.

12. A feature extraction apparatus, comprising:
an image obtaining module, configured to obtain a plurality of palm images of a palm;
a region determining module, configured to determine, through a feature extraction model trained by the feature extraction model processing apparatus according to claim 11, a first image region and a second image region other than the first image region in each of the plurality of palm images, each first image region comprising a preset part of the palm;
a feature obtaining module, configured to obtain a first feature vector of the first image region and a second feature vector of the second image region through the trained feature extraction model; and
a feature fusion module, configured to fuse the first feature vector with the second feature vector using the first self-attention weight and the second self-attention weight for the plurality of palm images through the trained feature extraction model, to obtain a palm feature.

13. A computer device, comprising a memory and a processor, the memory having a computer program stored therein, and the processor, when executing the computer program, implementing the operations of the method according to any one of claims 1 to 10.

14. A computer-readable storage medium, having a computer program stored therein, the computer program, when executed by a processor, implementing the operations of the method according to any one of claims 1 to 10.

15. A computer program product, comprising a computer program, the computer program, when executed by a processor, implementing the operations of the method according to any one of claims 1 to 10.
